# EUROPEAN PATENT SPECIFICATION

(11) **EP 4 306 966 B1**
(45) Date of publication and mention of the grant of the patent: **17.06.2026**
(21) Application number: 22184441.8
(22) Date of filing: 12.07.2022
(51) Int. Cl.: G01N 35/04, G06Q 10/08, B65G 54/02, G06Q 10/083

(54) **METHOD OF OPERATING A LABORATORY SAMPLE DISTRIBUTION SYSTEM, LABORATORY SAMPLE DISTRIBUTION SYSTEM, AND LABORATORY AUTOMATION SYSTEM**
VERFAHREN ZUM BETRIEB EINES LABORPROBENVERTEILUNGSSYSTEMS, LABORPROBENVERTEILUNGSSYSTEM UND LABORAUTOMATISIERUNGSSYSTEM
PROCÉDÉ PERMETTANT DE FAIRE FONCTIONNER UN SYSTÈME DE DISTRIBUTION DES ÉCHANTILLONS DE LABORATOIRE, SYSTÈME DE DISTRIBUTION DES ÉCHANTILLONS DE LABORATOIRE ET SYSTÈME D'AUTOMATISATION DE LABORATOIRE

(43) Date of publication of application: 17.01.2024
(73) Proprietor: Roche Diagnostics GmbH, 68305 Mannheim (DE); F. Hoffmann-La Roche AG, 4070 Basel (CH)
(72) Inventor: JANNER, Gabriele Piero, 8048 Zürich (CH); NG, Cho Yiu, 71636 Ludwigsburg (DE); REN, Shubin, 71636 Ludwigsburg (DE)
(74) Representative: Bittner, Thomas L.

(56) References cited:
- EP-A1- 3 537 159
- WO-A1-2021/228733
- WO-A1-2022/063760

## Description

The present disclosure refers to a method of operating a laboratory sample distribution system. Further, the present disclosure refers to a laboratory sample distribution system. In addition, it is referred to a laboratory automation system.

### Background

Laboratory automation systems are applied, in particular, for determining samples, for example samples of a bodily fluid, essentially automatically. The sample is typically received in a sample vessel or container which is processed via a laboratory automation system.

Such laboratory automation systems can comprise a plurality of units. A laboratory automation system usually comprises a plurality of laboratory stations or devices such as, for example, a pre-analytical, an analytical and / or a post-analytical station or device. Typically, the containers are transported between different stations of the system via a sample distribution or transportation system. The sample vessels carriers with or without samples may be moved along a line for processing the samples, wherein the sample vessel carriers are moved by means of a transport device having one or more actuators and actuator drivers or driving devices for driving the carriers. For example, the sample vessels may be moved or relocated from a first working station to a second working station provided in the line of processing in the system. The working stations or devices may also be referred to as working locations.

At present, only transport systems inside the laboratories are fully automated. The designs for those transport systems, however, are mostly rather simple, comprising conveyor systems, wherein samples and sample containers / carriers, respectively, are moved along fixed routes. Usually, a set of routes along different analyzers / laboratory stations is defined via the hardware design (placement of rails / tracks) and / or electronics (dip switch configurations, preprogrammed turn-table logic, etc.) (e.g., a belt-drive transport system). Hence, a specific sample / container / carrier can be assigned to a specific fixed route. The specific sample / container / carrier can be transported along this specific fixed route, can *"step off*" the route in proximity to a specific analyzer to be processed by the analyzer, and can *"step on"* the route again to be further transported along the specific fixed route until the end of the route is reached. The sample can then be, e.g., stored or wasted. Typically, these routes are designed in a manual process by *"brain power",* i.e., for a specific order situation, for example the laboratory designer defines the routes such that a reference set of orders is processed efficiently and predefined requirements are met.

For complex transport systems, however, such a design may reach its limits.

Document WO 2016 / 188 752 A1 discloses a laboratory automation system, which comprises: a number of laboratory stations, and a number of sample container carriers (e.g. 10 to 10000), wherein the sample container carriers are adapted to carry one or more sample containers. The sample containers comprise samples to be processed by means of the laboratory stations. A transport plane is provided, wherein the transport plane is adapted to support the sample container carriers. The transport plane comprises a number of transfer areas, wherein a transfer area of the number of transfer areas is assigned to a corresponding laboratory station of the number of laboratory stations. Samples are transferred to the laboratory stations by moving the corresponding sample container carrier to the assigned transfer area. Drive means are provided, wherein the drive means are adapted to move the sample container carriers on the transport plane simultaneously and independent from one another along individual transport paths.

More complex transport systems may require a more sophisticated operation method, especially to better harness their potential.

Document EP 3 095 739 A1 discloses a method of operating a laboratory sample distribution system comprising a number of sample container carriers adapted to carry one or more sample containers, wherein the sample containers comprise samples to be analyzed by means of a number of laboratory stations. A transport plane is provided, wherein the transport plane is adapted to support the sample container carriers. The transport plane comprises a number of transfer locations assigned to corresponding laboratory stations. Drive means are provided adapted to move the sample container carriers on the transport plane. The method comprises steps of, during an initialization of the laboratory sample distribution system, pre-calculating routes depending on the transfer locations, and after the initialization of the laboratory sample distribution system, controlling the drive means such that the sample container carriers move along the pre-calculated routes. During the initialization (start, booting) of the laboratory sample distribution system fixed routes extending over the transport plane are pre-calculated depending on (between) the different transfer locations. The pre-calculated routes are provided on the transport plane between the transfer locations. The transfer locations represent initial or goal nodes in the sense of Graph theory. The routes are calculated using an informed search algorithm, i.e. an A*-algorithm or a D*-algorithm. The A*-algorithm is an algorithm that is used in path finding and graph traversal, to efficiently calculate a traversable path between different nodes, e.g. in the form of the transfer locations.

Document EP 3 410 123 A1 refers to a method of operating a laboratory sample distribution system, wherein the laboratory sample distribution system comprises a number of sample container carriers, wherein each of the sample container carriers comprises at least one magnetically active device and wherein each of the sample container carriers is adapted to carry at least one sample container, and a number of interconnected transport plane modules, wherein each of the transport plane modules is adapted to support a number of said sample container carriers. A number of electro-magnetic actuators is provided, wherein below each transport plane module a number of said electro-magnetic actuators is stationary arranged in rows and columns. The electro-magnetic actuators are adapted to move a sample container carrier of said sample container carriers on top of said transport plane modules along a row of said rows or along a column of said columns by applying a magnetic move force to said sample container carrier. The method comprises the steps as follows: a) assigning at least one transport plane module of said transport plane modules to a route category, wherein at least two traffic lanes are formed on the route categorized transport plane module, wherein said sample container carriers are moved within each traffic lane in a given transport direction, wherein the transport directions of the at least two traffic lanes are opposite to each other and wherein a change from one transport direction to the opposite transport direction is not possible for said sample container carriers moved on the route categorized transport plane module, and b) assigning at least one another transport plane module of said transport plane modules to a waypoint category, wherein a change from one transport direction to the opposite transport direction is enabled for said sample container carriers moved on the waypoint categorized transport plane module.

Document US 9 835 637 B2 relates in general to an automation system for use in a laboratory environment and, more particularly, to systems and methods for scheduling samples within the automation system by providing queuing logic.

An analysis system for analyzing biological samples is disclosed in document US 2019 / 0 120 866 A1.

Document US 10 668 622 B2 refers in general to an automation system for use in a laboratory environment and, more particularly, to systems and methods for use in a clinical analyzer.

In document US 9 315 334 B2 an automation system for an in vitro diagnostics environment is disclosed. The system includes a plurality of intelligent carriers that include onboard processing and navigation capabilities. The carriers control local motion and navigate at decision points, such as forks in the track, to reach the appropriate testing station independently.

Document WO 2021 / 228733 A1 discloses a distribution system comprising a transport plane for distributing objects and carriers for transporting the objects. A drive system moves the carriers on the transport plane. A control system of the distribution system is configured to control the carriers to move on a planned route from a start position to a final destination position on the transport plane. The control system comprises a routing system configured to calculate the planned route for at least two carriers on the transport plane by modelling the transport plane with nodes and graphs and using a windowed hierarchical cooperative informed search algorithm. The routing system is configured to determine reserved and free time windows for each node. The routing system is further configured to assign an individual reservation length to each carrier for the next move on free time windows and assigns an infinite reservation time to the node of a logical position.

With complex transport systems, route calculation for the carriers also becomes more complex. The size of the possible route sets grows exponentially both in the number of carriers and in the number of transportation fields of the transport plane / transport plane modules. Even for a single carrier, there is a huge number of routes connecting its current position to the aimed destination. However, in typical use cases (with a large number of transportation fields and carriers), the optimal routing should consider simultaneously routes for hundreds of carriers.

### Summary

It is an object to provide an improved method of operating a laboratory sample distribution system and a laboratory sample distribution system. In particular, it is an object to provide technology for improved determining of routes for carriers for laboratory sample distribution systems. Specifically, it is an objective to avoid one or more deadlock situations in the laboratory sample distribution system as such a deadlock situation disturbs and interferes with sample distribution. Carriers involved in a deadlock situation will get stuck on the transport system such that they cannot reach their destination anymore. Furthermore, the routes involved in a deadlock situation and possibly also a part or all of the carriers on those routes cannot be used anymore.

For solving the problem, a method of operating a laboratory sample distribution system according to the independent claim 1 is provided. Further, a laboratory sample distribution system according to the independent claim 16 is provided. Moreover, a laboratory automation system according to claim 17 is provided. Further embodiments are disclosed in dependent claims.

According to one aspect, a method of operating a laboratory sample distribution system is provided. The laboratory sample distribution system comprises a plurality of carriers having a number of n (n>3) carriers each configured to carry one or more sample containers containing a sample to be analyzed by laboratory devices (wherein the plurality of carriers may be a subset of a total plurality of carriers comprised by the laboratory sample distribution system); a transport plane assigned to the laboratory devices and configured to support to the plurality of carriers, wherein the transport plane comprises a plurality of interconnected transport modules comprising a plurality of plane fields (wherein at least one of the plane fields (each plane field) may only accept one carrier at a time and / or at least one of the plane fields (each plane field) may accept more than one carrier at a time); and a driving device configured to control movement of the plurality of carriers along individual routes between the plurality of plane fields, the movement comprising moving, in response to driving control signals, the plurality of carriers between neighboring plane fields of the plurality of plane fields along the individual routes.

The method is comprising (i) moving the plurality of carriers along the individual routes on the transport plane, wherein the moving, for each carrier, comprises executing at least once steps of reserving a route segment along the individual route, the route segment being provided by one or more plane fields of the plurality of plane fields, and moving the carrier along the route segment; and (ii) preventing, for the plurality of carriers, a deadlock arrangement on the transport plane in which the plurality of carriers block each other from further movement along the individual routes (wherein the prevention of the deadlock arrangement on the transport plane may take place off run-time, e.g. via simulations and / or calculations, in particular when designing routes or sections of the routes, and / or in runt-time).

The preventing is further comprising (in the driving device) steps of: determining, at a present operation time, a potential deadlock arrangement for the plurality of carriers on the transport plane at a future operation time, wherein the potential deadlock arrangement is assigned a number of n deadlock plane fields occupied by the plurality of carriers in case of the potential deadlock arrangement; for a first carrier from the plurality of carriers moving along a first individual route, reserving a first route segment ending with a first end plane field; and assigning a non-reserve flag to a next plane field which is next to the first end plane field along the first individual route.

Further, the following is provided: the first end plane field provides for a first deadlock plane field of the n deadlock plane fields; the next plane field provides for a second deadlock plane field of the n deadlock plane fields; and the assigning of the non-reserve flag to the next plane field is preventing all remaining carriers from the plurality of carriers from reserving, along a second individual route, a second route segment which is assigned the next plane field as a second end plane field to be occupied by one of the remaining carriers at least a the future operation time.

According to another aspect, a laboratory sample distribution system is provided. The laboratory sample distribution system comprises a plurality of carriers having a number of n (n>3) carriers each configured to carry one or more sample containers containing a sample to be analyzed by laboratory devices; a transport plane assigned to the laboratory devices and configured to support to the plurality of carriers, wherein the transport plane comprises a plurality of interconnected transport modules comprising a plurality of plane fields; and a driving device configured to control movement of the plurality of carriers along individual routes the plurality of plane fields, the movement comprising moving, in response to driving control signals, the plurality of carriers between neighboring plane fields of the plurality of plane fields along the individual routes.

The system is configured to (i) move the plurality of carriers along the individual routes on the transport plane, wherein the moving, for each carrier, comprises executing at least once steps of reserving a route segment along the individual route, the route segment being provided by one or more plane fields of the plurality of plane fields, and moving the carrier along the route segment; and (ii) prevent, for the plurality of carriers, a deadlock arrangement on the transport plane in which the plurality of carriers block each other from further movement along the individual routes. With respect to preventing (in the driving device) the following is further provided: determining, at a present operation time, a potential deadlock arrangement for the plurality of carriers on the transport plane at a future operation time, wherein the potential deadlock arrangement is assigned a number of n deadlock plane fields occupied by the plurality of carriers in case of the potential deadlock arrangement; for a first carrier from the plurality of carriers moving along a first individual route, reserving a first route segment ending with a first end plane field; and assigning a non-reserve flag to a next plane field which is next to the first end plane field along the first individual route.

Further, the following Is provided: the first end plane field provides for a first deadlock plane field of the n deadlock plane fields; the next plane field provides for a second deadlock plane field of the n deadlock plane fields; and the assigning of the non-reserve flag to the next plane field is preventing all remaining carriers from the plurality of carriers from reserving, along a second individual route, a second route segment which is assigned the next plane field as a second end plane field to be occupied by one of the remaining carriers at least a the future operation time.

According to still another aspect, a laboratory automation system is provided, the system comprising the laboratory sample distribution system according to the aforementioned aspect and a plurality of laboratory devices.

Steps provided or conducted for data processing related to the operation of the laboratory sample distribution system such as preventing a deadlock arrangement may be performed in at least one of the driving device controlling the movement of the plurality of carriers along individual routes and a data processing device separated from the driving device, but functionally connected to the driving device and comprising one or more data processors (e.g., comprising a computer, a microcontroller, a CPU, a data storage, and / or communication interfaces).

A deadlock situation in which the carriers block each other from further movement along the individual routes is avoided efficiently by the technology provided.

For example, 10 to 10 000 sample container carriers may be provided. The laboratory sample distribution system may process 2 000 to 200 000 samples per day. In an embodiment, 2 to 50 of laboratory stations or devices may be provided. The transport plane may be planar, in particular completely planar.

A first and a second (sub-)transport plane may be provided, wherein the first and second transport plane may be provided at different levels. The carriers may be transported from the first to the second transport plane (and vice versa) via a lift (e.g., a paternoster lift) and / or ramps. The transport plane may comprise the first and the second (sub-)transport plane and optionally further (sub-)transport planes. Accordingly, routes can also comprise routes that extend over both the first and the second and optionally further transport planes, each of which is provided on different levels.

In this regard, a route connecting segment of a route that extends over multiple transport planes, each provided on different levels, may connect a route section on one of these planes, e.g., the first transport plane, with a route section on another of these planes, e.g., the second transport plane, wherein the route segment connecting route sections on the different levels will be part of the route. This route-connecting segment may be comprised by a transport system such as the ramp or the lift.

In the present application, in general, the term "transport plane" refers to a two-dimensional and / or a three-dimensional surface, i.e., both a planar plane and / or a surface that extends not only in two spatial dimensions but also in a third spatial dimension. Such a three-dimensional surface in the sense of this application can be, for example, a surface with one or more curvatures, a ramp and / or lift between (sub-)planes.

The (sample container) carriers can be placed on top of the transport plane. The carriers can be moved on top of and over the transport plane. The transport plane may comprise 2 to 100 transfer locations or fields. The transfer locations (fields) may be assigned to corresponding laboratory stations or devices. For example, each laboratory device may have a single corresponding transfer location (field) configured to transfer a sample carrier and / or a sample from the transport plane to the laboratory device or back. Alternatively, more than one transfer location (field) may be assigned to a corresponding laboratory station, in particular an output transfer location and an input transfer location. The transfer locations may be statically or dynamically assigned to the laboratory stations. In other words, during operation / at run-time, the transfer locations may be changed, if necessary.

Although the carriers are primarily configured to carry one or more sample containers containing a sample, the carriers (or at least one of them) can carry one or more empty sample containers, can be unloaded (empty), and / or may transport other goods, for example, reagent cassettes and / or consumables, for example, disposable pipette tips and / or reaction cells. The carriers (or at least one of them) may be configured to carry waste, for example, used tips, reaction cells, and / or empty reagent cassettes. The waste may be transported from the instrument to a waste disposal unit. The empty carrier(s) may be used for cleaning, maintaining, and / or repairing the transport surface (plane).

A transport module can comprise one or more plane fields. A plane location can comprise one or more plane fields. Plane fields may define respective plane locations. Plane locations can correspond to transport modules. Plane fields assigned to the same transport module do not have to be assigned to the same plane location. Each plane field / location / position can correspond to a certain area / logical field on the transport plane. In particular, the plane fields may be the logical fields on the transport plane. The transport plane can be segmented into several logical fields, e.g. square shaped logical fields of identical size and outline. The logical fields may form a regular grid, wherein each cell of the grid may correspond to a logical field, each cell of the grid may be a square of identical size (identical in X- and Y-direction), and / or the grid may (exactly) cover the transport plane. One or each transport module (TM) may comprise one or more logical fields (e.g., a subset of the logical fields forming the transport plane). A set of (interconnected) transport modules may form the transport plane. Pitches be-tween adjacent transport modules (TMs) may form pitches in the regular grid. The logical fields can be provided in such a way that each logical field can accommodate only one carrier. For example, 10 to 10 000 plane locations or fields may be provided. Each plane field / logical field can correspond to a transport module.

From each plane position or logical field, the carriers may generally be able to move in the two X- and the two Y-directions (left / right and up / down). Alternatively, the carriers may be restricted to only move in one X-direction and one Y-direction from each plane position or logical field. However, the permitted directions of movement do not have to be the same for each plane position / logical field. For example, at a first plane position or logical filed, the carriers can only move up and to the right, and at a second plane position / logical field, the carriers can only move down and to the left. The restriction may be provided to prevent 2x1 (1x2) deadlocks.

The individual routes can be determined prior to running the laboratory sample distribution system which may also be referred to as pre-determining of individual routes and / or at runtime of the laboratory sample distribution system. The individual routes can be used as or represented by lookup table. Each time a carrier needs to travel or move from a starting field to a destination, a corresponding route can be selected from the lookup table. Based on information comprising routing data indicative of the individual routes the potential deadlock arrangement may be determined.

In the deadlock arrangement a set of carriers is prevented or blocked from making the next move because other carriers already occupy the plane fields and cannot move either. The smallest deadlock situation, if field-to-field (logical field / plane position) moves are possible for each field in only one X- and one Y-direction, comprises four carriers. In this case, the four carriers are located in an area of 2x2 plane fields. Each plane location or filed is occupied by one carrier. At each plane field in the area of 2x2 plane fields, a clockwise or counterclockwise movement to the next plane location or field within the area of 2x2 plane fields is allowed and intended. However, due to the occupation, such a movement is not possible as the possibility of each carrier's movement depends on the other carrier's possibility to move. Hence, a circular dependency of the carriers and their next movements exists. Bigger dead-lock situations, caused by the same mechanism but involving more carriers, can exist as well.

The smallest deadlock situation, if field-to-field (logical field / plane position) moves are possible for each field in each horizontal direction, comprises two carriers. In this case, analogously to the 2x2 deadlock, the two carriers are located in an area of 2x1 (1x2) fields. The carriers involved in a larger deadlock might be placed on all the transport locations of a rectangular (n x m) region of the transport plane. Besides this situation, deadlocks may involve arbitrary closed sequences of plane locations each containing a carrier that cannot move due to a circular dependency. Deadlocks may even involve plane locations of different planes and ramps / lifts. The embodiments presented here analogously apply.

Deadlocks may be detected. Deadlocks may be detected by detecting cycles in the graph's incidence matrix. A list of carriers that at the end of the current move are not going to be able to reserve the next field because another carrier is sitting there is (regularly) updated. A list of plane corresponding to the carriers that cannot reserve the next field because another carrier is sitting there (at the end of the planned moves) is (regularly) updated. Determining a corresponding adjacency matrix M. The elements of the matrix M indicate whether plane position corresponding to the carriers that cannot reserve the next field because another carrier is sitting there are adjacent (connected via arcs) or not in the graph. Through matrix multiplications, it can be determined whether plane position corresponding to the carriers that cannot reserve the next field because another carrier is sitting there form one or more cycles. Detected cycles may be indicative of (potential) deadlocks.

For all identified deadlocks, the sizes (number of positions that need to be occupied to form a deadlock) may be computed. Small deadlocks like 2x2 deadlocks may occur more easily than larger deadlocks. Also, larger deadlocks may be frequently caused by smaller deadlocks. Avoiding small and large deadlocks may comprise reducing the solution space for finding optimized routes. Eliminating the chance on creating small deadlocks may be prioritized. A dead-lock size threshold may be provided. The calculating of the optimized set of individual routes may avoid the creation of routes that may result into deadlocks with a size smaller or equal to the deadlock size threshold.

Deadlocks may be prevented by moving rules for the carriers. Each carrier may reserve a corresponding track segment. A first carrier may reserve a first track segment. The first track segment may comprise one or more subsequent plane positions on the route of the first carrier starting from the current plane position of the carrier. The positions of the reserved first track segment may be blocked for other carriers. The first plane position on the route of the first carrier subsequent the reserved first track segment may be flagged. The flagged plane position may not be blocked for other carriers. A second carrier may not reserve a second track segment that ends on the flagged plane position, i.e. the last plane position, starting from the current position of the second carrier, of the second track segment of the second carrier may not be the flagged plane position. Track segments may comprise a fixed number of plane positions, e.g. one, two, or more. Alternatively, different carriers may reserve track segments with a different number of plane position.

The determining of the potential deadlock arrangement may comprise determining a potential closed sequence deadlock arrangement in which the plurality of carriers are provided on plane fields arranged in a closed sequence of plane fields. In such deadlock arrangement the carriers are occupying plane fields provided along a closed line. For each of the carriers the next field of movement along the closed line is blocked by another one of the carriers. Such deadlock arrangement, if not avoided, may be solved by re-determining at least one of the individual routes including change of direction of movement (different next field). In an embodiment, four carriers (n=4) may be determined to potentially entering into a deadlock arrangement (2x2 arrangement).

The moving of the plurality of carriers may comprise restricting movement for each carrier from the plurality of carriers to only a single vertical direction and a single horizontal direction of the transport plane.

A specific pattern for allowed field-to-filed (location-to-location) movements on the transport plane may be provided, e.g. to avoid 2x2 deadlocks. At each plane location or filed, the carriers can exclusively move in one X- and one Y-direction. The plane may be rectangular. In this or other embodiments, the plane may be divided in quadratic areas of n x n plane locations or fields. The carriers may be allowed, in the upper part (half) of each of the quadratic areas, to move in a first X-direction and, in the lower part (half) of each of the quadratic areas of the transport plane, to move in a second X-direction being different from the first direction, i.e. the first and second directions lead in opposite directions. The carriers may be allowed, in the left part (half) of each of the quadratic areas, to move in a first Y-direction and, in the right part (half) of each of the quadratic areas of the transport plane, to move in a second Y-direction being different from the first vertical direction, i.e. the first and second Y-directions lead in opposite directions. Each quadratic area may comprise one area of 2x2 plane locations or fields in which a circular movement is allowed. In addition, areas of 2x2 plane fields comprised by four of such quadratic areas may allow circular movement. In these areas of 2x2 plane locations or fields, four allowed movements may define the allowed circular movement. One of the four allowed movements can be removed. Alternatively, more than one, preferably two, of the four allowed movements can be removed. Preferably, the one or more removed allowed movements are ones that would not be expected to be used frequently. In particular, the one or more removed allowed movements are ones that lie perpendicular to the main transportation flow.

There can be two ways to obtain routes where 2x2 deadlocks are avoided: (1) the allowed directions for determining routes are defined according to the above specific pattern and / or (2) when calculating the optimized set of off-line routes, the rule is added to avoid that any subset of field-to-field movements involved in the set of routes define an area of 2x2 plane locations in which a circular movement is allowed.

The preventing of the deadlock arrangement on the transport plane may comprise providing flag data in the driving device indicative of the next plane field assigned the non-reserve flag, and updating the flag data in case one of the following is provided: assigning the next plane field the non-reserve flag, and terminating assignment of the non-reserve flag for the next plane field. In response to the terminating, a record provided the plane field assigned the non-reserve flag may be deleted from flag data. The flag data may be provided with a lookup table in a data memory provided, for example, in the driving device or separated from the driving device in a central memory device accessible by the driving device.

The reserving of the second route segment may comprise looking up the flag data, and verifying the second end field of the second route segment being not assigned a non-reserve flag. Otherwise, in case the second end plane field cannot be verified as being free of a non-reserve flag, an alternative second route segment different from the second route segment may be determined. Following, for the alternative second route segment, again it is verified that the end field is not assigned a non-reserve flag. Such steps may be repeated until some second route segment is found for which the end plane field is verified to have not assigned a non-reserve flag.

In the method, the moving of the plurality of carriers along the individual routes may comprise the following: determining a model representing the transport plane with plane locations and location-to-location movements between plane locations associated to the plurality of carriers; calculating an optimized set of individual routes between pairs of plane locations from the plurality of plane locations using the model, the calculating comprising solving an optimization problem in which routes between the pairs of plane locations are simultaneously optimized; and providing the optimized set of individual routes as individual routes on the transport plane. In this context, the plane locations may be plane fields. Such determining of the individual routes may be provided as pre-determining of individual routes prior to moving the carriers on the transport plane in at least one of the driving device and data processing device separated from the driving device. The pre-determining may be conducted, for example, prior to initializing the laboratory sample distribution system.

For example, 5 to 10 routes between the pairs of plane locations may be simultaneously optimized. The pairs of plane locations may be 5 to 10 pairs. Routes between the 5 to 10 pairs of plane locations may be simultaneously optimized.

The calculating of the individual routes between pairs of plane locations from the plurality of plane locations may further comprise: determining a plurality of individual routes between pairs of plane locations from the plurality of plane locations (e.g., in the directed graph model), and determining an optimized set of individual routes from the plurality of routes, comprising solving an optimization problem (e.g., a mixed-integer optimization problem) for the plurality of individual routes.

The model may be a directed graph model of the transport plane, wherein nodes of the directed graph model are assigned plane locations and arcs connecting the nodes of the directed graph model are assigned location-to-location movements between two plane locations. The calculating of an optimized set of individual routes in the directed graph model can comprise finding an optimal multi-commodity flow in this directed graph. The multi-commodity flow problem is a network flow problem with multiple commodities (flow demands) between different sources and sink nodes. The endpoint locations / pairs of locations or fields can define the source and sink nodes. Alternatively, the model can be a numerical model and / or a simulation. However, the model can also be another model, e.g. a combination of aforementioned models.

Merely field-to-field (location-to-location) movements between two neighboring plane fields (locations) may be allowed. Merely location-to-location movements between two neighboring groups of logical fields / plane positions may be allowed. The arcs may merely connect neighboring nodes of the directed graph model.

In case of predetermining individual routes, the method may further comprise determining a re-optimized set of individual routes from the individual routes, for example, at a time of initializing the laboratory sample distribution system. The determining of the re-optimized set of individual routes may depend on the expected carrier traffic on the transport plane. For example, the individual routes pre-determined may comprise two sets of individual routes, a first set for high traffic and second set for low traffic. If low traffic is expected, the second set of optimized routes is selected when determining the re-optimized set of individual routes and vice versa. The optimized set of individual routes may alternatively comprise several sets of optimized individual routes for several traffic scenarios. When determining the re-optimized set of individual routes, in this case, depending on the expected traffic, the corresponding set of optimized routes is selected from the several sets of optimized routes.

In the different alternative embodiments, the plurality of individual routes between pairs of plane fields / locations from the plurality of plane fields / locations in the directed graph model can be selected form a plurality of possible routes connecting the pairs of plane fields. The possible routes can be located (directly) on the transport plane, preferably can be entirely located (directly) on the transport plane. Each pair of plane fields / locations may be indicative of a pair of a start field / location / node and a destination field / location / node of one of the routes. Start and destination location or field of a certain individual route may constitute end-point locations or fields of this individual route. The pairs of plane locations or fields may correspond to pairs of transfer locations or fields assigned to one or more laboratory stations or devices and configured to transfer sample container to or from the laboratory station(s) or device(s).

In the method, the pre-determining of (e.g. offline) individual routes may further comprise: determining a first optimized set of individual routes; assigning the first optimized set of individual routes a first application parameter; determining a second optimized set of individual routes which is different from the first optimized set of individual routes; and assigning the second optimized set of individual routes a second application parameter. Further, the controlling of the driving device may further comprise receiving application information indicative of a current application parameter, and selecting one of the first optimized set of individual routes and the second optimized set of individual routes for controlling the driving device, if it is determined that the current application parameter matches the first application parameter or the second application parameter. The first and second application parameter can be indicative of a first and a second date, time period, traffic situation (e.g. high or low traffic), operation mode, and / or orders.

The (expected) carrier traffic (carrier traffic intensity) may depend on several factors. The throughputs can be higher at working days than in the weekend and can be higher between 8:00 and 18:00 than during the night. The types of ordered tests can be different at certain days or hours if, for example, glucose screening is carried out on a batch of samples or clinical studies are carried out. Thus, an endpoint assigned to a corresponding laboratory device may serve as an endpoint more frequently. The corresponding routes comprising this endpoint may have higher carrier traffic (carrier traffic intensity). Likewise, due to seasonal effects or pandemic situations, some tests are ordered much more frequently for a longer period of time.

The application parameters may correspond to a KPI (Key Performance Indicator) of the laboratory automation system. Examples for application parameters may be the traffic data, the constraints, the weightings of the constrains, etc., or combinations thereof.

The optimization problem, which may be model-related, can be one of the following: a multi-commodity flow problem, in particular a multi-commodity flow problem in a directed graph, a shortest path problem, and a minimum flow problem.

The calculation of the optimized set of off-line routes between pairs of plane locations from the plurality of plane locations can comprise, for example, finding an optimal multi-commodity flow in the directed graph. The multi-commodity flow problem is a network flow problem with multiple commodities (flow demands) between different source and sink nodes. The endpoint locations / pairs of locations can define the source and sink nodes.

The optimization problem may be solved, for example, by applying a MIP-solver (Mixed-Integer-Programming-solver). A generic solver for MIP problems can be used. The MIP-solver can be one of the following: Gurobi, IBM ILOG Cplex, and Coin-OR CBC, i.e. solutions for the mixed-integer optimization problem can be found with software products like Gurobi, IBM ILOG Cplex, and Coin-OR CBC. There are additional solvers known as such that are capable of solving this kind of optimization problem. In general, mixed-integer optimization problems deal with mathematical optimization problems with two types of variables: variables taking values in an integer domain, and variables taking values in a continuous domain.

First, an optimization problem may be defined, e.g. a multi-commodity flow problem, i.e. the problem of interest is modeled. The problem of interest may be to find a set of routes on a transport plane that is optimal with respect to one or more given criteria (constraints). Then, a solution approach, e.g. a MIP-solver, for the defined optimization problem may be selected to solve the optimization problem.

Examples of possible solution approaches are presented in paper P. FESTA, "A brief introduction to exact, approximation, and heuristic algorithms for solving hard combinatorial optimization problems", 16th International Conference on Transparent Optical Networks (ICTON), 2014, pages 1 to 20, doi: 10.1109 / ICTON.2014.6876285. The optimization problem can be solved by an exact optimization method, an approximation of the original problem by a simpler one and solving the simpler problem, and / or heuristics and / or metaheuristics. The exact optimization method can be a (i) branch and bound method, (ii) a dynamic programming method, or (iii) a solver (also other exact optimization methods can be used). The solver may comprise multiple algorithms (not only exact ones). The exact optimization method can also comprise combinations of aforementioned methods. Solving the approximated simpler problem may comprise applying (i) one or more greedy algorithms, (ii) a local search, (iii) one or more relaxation-based algorithms, or (iv) one or more random algorithms (also other methods for solving the approximated simpler problem may be used). Solving the approximated simpler problem may also comprise combinations of aforementioned methods. Heuristics and / or metaheuristics may be (i) a simulated annealing, (ii) one or more evolutionary algorithms, (iii) a tabu search, or (iv) one or more Greedy Randomized Adaptive Search Procedures (GRASP). The heuristics and / or metaheuristics may also comprise combinations of aforementioned methods.

The method may further comprise: (i) providing first frequent endpoint location data indicative of a first selection of plane locations (or fields) most frequently providing for an endpoint of an individual route; and (ii) determining the directed graph model of the transport plane, wherein first nodes of the directed graph model are assigned the plane locations (or fields) from the first selection of plane locations (or fields) and first arcs starting and / or ending at the first nodes of the directed graph model are assigned location-to-location (field-to-field) movements from and / or to plane locations (or fields) from the first selection of plane locations (or fields).

Alternatively or in addition, the method may comprise, in the data processing device, providing first frequent endpoint location (field) data / data on first frequent pairs of endpoint locations (fields) indicative of a first selection of plane locations most frequently providing for an endpoint / a first selection of plane location (field) pairs most frequently providing for a pair of endpoints (start and destination) of a route of traveling for the carriers. The first selection of plane location (field) pairs may correspond to 5 to 10 pairs of endpoints, i.e. the first selection of plane location (field) pairs may correspond to 5 to 10 routes of traveling for the carriers.

The pairs of plane fields or locations can comprise the first selection of plane fields (most frequently providing for an endpoint of a route of traveling or moving for the carriers) and / or the first selection of plane location (field) pairs. In particular, the first selection of plane fields (most frequently providing for an endpoint of an individual route of moving for the carriers) and / or the first selection of plane location (field) pairs can define the pairs of plane fields / locations. The first selection of plane locations (or fields) (most frequently providing for an endpoint of a route of traveling for the carriers) and / or the first selection of plane location (field) pairs can correspond to the transfer locations (or fields) and / or pairs of the transfer locations (but is not limited thereto). However, the first selection of plane locations (fields) may correspond to all endpoints and / or the first selection of plane location (field) pairs can correspond to all pairs of endpoints (start and destination) for travel routes for carriers.

Alternatively or in addition, the method may comprise, in the data processing device, providing data on first endpoint locations (fields) and / or first pairs of endpoint locations (fields) indicative of a first selection of plane locations (fields) and / or a first selection of plane location (field) pairs located in a first area, corresponding to a first workflow, and / or corresponding to high-priority samples (time-critical tests).

One transfer field or location may correspond to one or more than one laboratory devices or stations such as, for example, analyzers. For the one or more than one laboratory devices a plurality of plane fields (each) can define the one transfer field. A first plane field of the plurality of plane fields can define the one transfer field. Alternatively, a second plane field of the plurality of plane fields can define the one transfer field. Whether the first or second plane field defines the one transfer field can be swapped. In particular, whether the first or second plane field defines the one transfer field can be swapped during the determining of individual (e.g. off-line) routes, in particular during determining a plurality of routes between pairs of plane fields from the plurality of plane fields in the directed graph model and / or during determining an optimized set of routes. The laboratory devices can comprise an input (assigned to a first transfer field) for the carriers and an output (assigned to a second transfer field) for the carriers. In particular, the input and output can be swapped during determining the individual routes. In particular, the swapping can take place in one or more of the optimization steps. Merely pairs of input and outputs may correspond to the pairs of plane fields. However, input and output can correspond to the same plane field.

The method may further comprise: (i) providing second frequent endpoint location data indicative of a second selection of plane locations (or fields) less frequently providing for an end-point of an individual route, wherein the second selection of plane locations (or fields) is different from the first selection of plane locations (or fields); and (ii) determining the directed graph model of the transport plane, wherein second nodes of the directed graph model are assigned the plane locations (or fields) from the second selection of plane locations (or fields) and second arcs starting and / or ending at the second nodes of the directed graph model are assigned location-to-location (field-to-field) movements from and / or to plane locations (or fields) from the second selection of plane locations (or fields).

Alternatively or in addition, the method may comprise, in the data processing device, providing second frequent endpoint location (field) data / data on second frequent pairs of endpoint locations (fields) indicative of a second selection of plane locations (fields) less frequently providing for an endpoint / a second selection of plane location (field) pairs less frequently providing for a pair of endpoints (start and destination) of a route of traveling for the carriers. The second selection of plane location (field) pairs may correspond to 5 to 10 pairs of endpoints, i.e. the second selection of plane location (field) pairs may correspond to 5 to 10 routes of traveling for the carriers. The second selection of plane locations (fields) may differ (completely / in pairs) from the first selection of plane locations (fields). The second selection of plane location (field) pairs may differ (completely / in pairs) from the first selection of plane location (field) pairs.

The pairs of plane fields or locations can comprise the second selection of plane locations (or fields) and / or the second selection of plane location (field) pairs. In particular, the second selection together with the first selection of plane locations (or fields) and / or plane location (field) pairs can define the pairs of plane locations (or fields). The second selection of plane locations (or fields) and / or the second selection of plane location pairs can be non-transfer locations (or fields), i.e. the second selection of plane fields and / or the second selection of plane location pairs may not comprise transfer locations (or fields) (but is not limited thereto).

Alternatively or in addition, the method may further comprise, in the data processing device, providing data on second endpoint locations (fields) and / or second pairs of endpoint locations (field) indicative of a second selection of plane locations (fields) and / or a second selection of plane location (field) pairs located in a second area, corresponding to a second workflow, and / or corresponding to samples with a lower priority.

The first selection of plane locations (or fields) / plane location (field) pairs may define a first set of pairs of plane locations (or fields). The second (and first) selection of plane locations (or fields) / plane location (field) pairs may define a second set of pairs of plane locations (or fields). The first and second set of pairs of plane locations (or fields) may be made of (may define) the pairs of plane locations (or fields). The determining of routes which may be, for example, conducted as the pre-determining of individual routes may comprise a first determining of routes, wherein the first set of pairs of plane locations (or fields) defines the pairs of plane locations (or fields), and a second determining of individual routes, wherein the second set of pairs of plane locations (or fields) defines the pairs of plane locations (or fields). The first and second determining of routes may take place independently of each other. First and second (optimized) routes may correspond to the first and second determining of individual routes. The determining of routes may comprise a third determining of routes. The third determining of routes may correspond to third (optimized) routes. The third determining of routes may comprise determining an optimized set of routes between a third selection of plane locations (fields) / plane location (field) pairs. Analogously, fourth, fifth and further optimized individual routes can also be calculated in groups (5 to 10 routes and / or 5 to 10 plane location pairs). The second determining of routes may take place subsequent the first determining of routes. The second determining of routes may depend on the first (optimized) routes determined via the first determining of routes. The expected traffic load from the first set of routes may be considered during the second optimization. During the second determining of routes, the first (optimized) routes may be fixed. The second determining of routes may comprise single-route algorithms, e.g. A*-algorithm. The first and second determining of routes may correspond to determining the plurality of routes between pairs of plane locations (or fields) from the plurality of plane locations (or fields) in the directed graph model. The third determining of routes may correspond to determining the optimized set of routes from the plurality of routes.

A pair of the first set of pairs of plane locations (or fields) may comprise two plane locations (or fields) from the first selection of plane locations (or fields). A pair of the second set of pairs of plane locations (or fields) may comprise two plane locations (or fields) from the second selection of plane locations (or fields). However, additionally or alternatively, a pair of the second set of pairs of plane locations (or fields) may comprise one plane locations (or fields) from the first selection of plane locations (or fields) and one plane locations (or fields) from the second selection of plane locations (or fields).

The method may still further comprise the following: providing traffic data indicative of a predicted number of carriers moving between the pairs of plane locations (or fields) in a time interval; and calculating the optimized set of individual routes between pairs of plane locations from the plurality of plane locations in dependence on the predicted number of carriers travelling between the pairs of plane locations. In addition or alternatively, the traffic data may be indicative of an actual / recent number of carriers travelling between the pairs of plane locations in a time interval.

The providing of traffic data may further comprise at least one of: providing traffic data determined from a sample order listing; providing traffic data determined from historical data indicative of historical operation of the laboratory sample distribution system; providing traffic data determined from workflow data indicative of a workflow for the one or more sample containers to be carried by the plurality of carriers; providing traffic data determined from a measured current and / or recent number of carriers transported; and providing traffic data determined from a simulation. The traffic data may correspond to empty as well as to filled (routed) carriers.

The calculating of the optimized set of individual routes between pairs of plane locations from the plurality of plane locations may further comprise applying at least one constraint selected from the following group: minimizing a route length of each individual route; minimizing a weighted route length of each of the individual routes; minimizing a number of route curves for each individual route; minimizing a number of individual routes by joining another individual route; uniformly distributing carrier traffic per plane field; limiting field-to-field movements be-tween two plane fields to movement between adjacent plane fields only; excluding plane fields reserved for carrier queuing; uniformly distributing predicted wear of plane fields over the plurality of plane fields of the transport plane; minimizing the energy consumption of the laboratory sample distribution system; and minimizing / avoiding areas of 2x2 plane positions (logical fields) with four crossings. An area of 2x2 plane positions with four crossings may be indicative of one potential deadlock situation. Analogously, further potential deadlock situations may be defined. An additional or alternative constraint may be the minimization or avoidance of one or more further potential deadlock situations.

The constraints can have weightings. Routes with higher expected traffic may be higher weighted. The more highly weighted route may be prioritized over the less highly weighted route in minimizing the respective route length, number of route curves, and / or number of crossings and / or overlaps with other routes. The first and second pre-determining of individual routes may comprise applying different constraints.

The constraints can have weightings. The weightings can be set empirically. The constraints can be hard (e.g., can have an *"infinite weight*") or soft (e.g., can have a finite weight). Constraints relating to routes with high traffic can have higher ratings than routes with lower traffic. According to one example, which refers to a route with low traffic intensity, the following weights are applied in the optimization: (i) route length: 2 penalty points per field (plane location or plane position) used in the route; (ii) route joining: 80 penalty points for route joining another one. According to another example, which refers to a route with higher traffic intensity, the following weights are applied in the optimization: (i) route length: 3 penalty points per field (plane location or plane position) used in the route; (ii) route joining: 120 penalty points for route joining another one.

The preventing of the deadlock arrangement on the transport plane may further comprise preventing moving a carrier along a corresponding route segment in case a last field of the fields of the corresponding route segment is comprised by the individual route of another carrier.

With respect to the laboratory automation system, the plurality of laboratory devices (stations) may comprise one or more laboratory devices selected from the following: laboratory device for pre-analytics, laboratory device for sample analysis, and laboratory device for post-analytics. A pre-analytical station or device may be adapted to perform any kind of pre-processing of samples, sample containers and / or sample container carriers. Analytical stations may be adapted to use a sample or part of the sample and a reagent to generate a measuring signal, the measuring signal indicating if and in which concentration, if any, an analyte is existing. Post-analytical stations may be adapted to perform any kind of post-processing of samples, sample containers and / or sample container carriers.

Controlling of the driving device may comprise the following: (i) in the driving device, receiving a reservation request from a carrier traveling on a selected individual route from the pre-determined individual routes and being located on a present route location or field along the selected individual route, the reservation request indicating a request for reserving a following route field along the selected individual route, (ii) verifying whether the following route field is free for travelling by the driving device, and (iii) moving the carrier from the present route field to the following route field along the selected individual route, if it is verified by the driving device that the following route field is free for travelling.

After verifying that the following route field is free for travelling and prior to moving the carrier, the following route field can be reserved for this carrier, i.e. the following route field can be blocked for other carriers. In particular, the following route field can be blocked for other carriers until the carrier in question has reached and subsequently left the following route field. The above may analogously apply for n following route fields. The n following route fields may correspond to a subset of locations / fields (e.g., logical fields / plane positions) along the selected individual route. In this case, the n following route fields can be unlocked for other carriers one after the other after they have been passed through by the carrier.

The determining of individual routes which may be conducted as the pre-determining may further comprise, in the data processing device, receiving first route traffic information indicative of high carrier traffic for a first individual route, and splitting the at least one individual route into two or more different individual routes. The first route traffic information may be derived by the traffic (intensity) data indicative of the predicted number of carriers travelling between the pairs of plane fields in a time interval. A (traffic-)threshold may be predefined. If the number of carriers travelling between the (corresponding) pair of plane fields in a time interval is greater than the threshold, the traffic may be identified as high (high traffic). If the number of carriers travelling between the (corresponding) pair of plane fields in a time interval is lower than the threshold, the traffic may be identified as low (low traffic).

Several (traffic-)thresholds of different sizes can be defined. The more (traffic-)thresholds are exceeded, the more often the at least one individual route can be split. The at least one individual route can be split into as many different individual routes as thresholds have been exceeded. The (traffic-)threshold can be indicative of the maximum capacity of a route. In case of several thresholds, the first / smallest threshold may be indicative of the maximum capacity of a route and the subsequent threshold may be indicative of twice the maximum capacity of a route.

The different individual routes may comprise a first and a second individual route being different from each other. The first and second individual routes may have overlap-sections and spaced sections. For example, the spaced sections may comprise parallel sections. Carriers that originally followed the at least one individual route prior to the splitting of this route may follow one of the two or more different individual routes into which the at least one individual route has been split. The carriers can be divided equally between the two or more different individual routes. Thus, in case of two different individual routes, 50 % of the carriers may follow the first of the two different individual routes and 50 % of the carriers may follow the second of the two different individual routes. Alternatively, the loads of the different individual routes may be different. For example, the shortest of the different individual routes may have the highest load. If one of the different individual routes is the best with respect to the optimization (e.g., is the shortest and / or has the fewest crossings with other routes), this route can have the highest load of the different individual routes. Alternatively, one route of the different individual routes can be loaded with traffic until the (traffic-)threshold is reached and all traffic exceeding this threshold can be sent to a further route of the different individual routes.

A traffic intensity matrix or list of two dimensions can be indicative of the (expected) traffic intensity for each pair of plane locations (start-point / end-point combination) (cf. Table 1). Each pair of plane locations can correspond to a certain (needed) traffic intensity.

**Table 1: Example of traffic intensity matrix with start-points in the columns and end-points in the rows. Each table entry represents an expected traffic intensity for the corresponding pair of start-point and end-point.**

| Traffic intensity in carriers per minute | Plane location A as start-point | Plane location B as start-point | Plane location C as start-point |
|---|---|---|---|
| Plane location A as end-point | - | 2 | 4 |
| Plane location B as end-point | 1 | - | 3 |
| Plane location C as end-point | 2 | 6 | - |

The method may further comprise providing traffic intensity data indicative of a predicted number of carriers travelling between each of the pairs of plane fields in a time interval. The traffic intensity data may be comprised by the traffic data. The traffic intensity may comprise the traffic intensity matrix or the list of two dimensions.

The traffic data may be determined based on the traffic intensity data and / or the traffic intensity for each pair of plane locations. The traffic intensity data and / or the traffic intensity for each pair of plane locations may be calculated on a total accumulated traffic between each pair of plane locations, a peak traffic between each pair of plane locations, and / or capacities of the laboratory devices assigned to each pair of plane locations. For determining the total accumulated traffic, all moves between each pair of plane locations can be calculated, e.g. from order lists, e.g. for a specific time interval. For instance, the number of carriers being moved / estimated to be moved within 24 hours between each pair of plane locations can be indicative of the total accumulated traffic between each pair of plane locations. For determining the peak traffic, a time-window (e.g., a moving time window) or fixed time intervals of, e.g. 15 or 30 minutes over 24 hours, may be defined, in which the maximum traffic intensities can be identified for each pair of plane locations. The peak traffic can correspond to a global or a local peak traffic. The global peak traffic corresponds to the traffic intensities for each pair of plane locations when the traffic between all pairs of plane locations is maximum. The local peak traffic corresponds to the maximum traffic intensities for each pair of plane locations. The maximum traffic intensities for different pairs of plane locations can be present at different times. The capacities of the laboratory devices can be considered to avoid queues in the proximity of the laboratory devices. The sum of the traffic (intensities) (for each route) can correspond to the transport capacity of the system (for each route). The transport capacity can be matched (for each route) to the capacities of the laboratory devices (for each route).

The above (traffic-)threshold may be compared to traffic intensity data for each pair of plane fields or locations to decide whether the traffic is high.

The first selection of plane fields may be indicative of frequent pairs of plane fields (endpoints of carrier routes). The second selection of plane fields may be indicative of less-frequent pairs of plane fields (endpoints of carrier routes). The first selection of plane fields may correspond to high entries in the traffic intensity matrix. The second selection of plane fields may correspond to lower entries in the traffic intensity matrix.

The determining of individual routes may comprise a first determining of individual routes, wherein the first selection of plane fields defines the pairs of plane fields, and a second pre-determining of individual routes, wherein the second selection of plane fields defines the pairs of plane fields. The first determining of individual routes may be prioritized. The first determining of individual routes may take place prior to the second determining of individual routes. During the second determining of individual routes, the first determined individual routes may be fixed / "frozen". The first and second determining of individual routes may be provided analogously to the determining of individual routes.

In an optimization, the traffic intensities can be used to weight the importance of each of the pairs of plane fields. For instance, for a pair of plane fields with high traffic intensity, it is more important to reduce the number of bends or crossings of the corresponding route connecting the pair of plane fields than for pairs of plane fields with less traffic intensities.

The determining of individual routes may further comprise receiving second route traffic information indicative of high carrier traffic (intensity) for a second individual route, and preventing the second individual route from route adjustment while determining the plurality of individual routes and / or determining the optimized set of individual routes. This step may alternatively or additionally be comprised by the step of calculating the optimized set of individual routes.

The determining / calculating of the individual routes between the pairs of plane fields from the plurality of plane fields (e.g., in the directed graph model) may further comprise: receiving first carrier traffic information indicative of a first carrier traffic scenario for the plurality of individual routes; determining a first plurality of individual routes between the pairs of plane fields from the plurality of plane fields (e.g., in the directed graph model); receiving second carrier traffic information indicative of a second carrier traffic scenario for the plurality individual routes, wherein the second carrier traffic scenario is different from the first carrier traffic scenario; and determining a second plurality of individual routes between the pairs of plane fields from the plurality of plane fields (e.g., in the directed graph model). This step may alternatively or in addition be comprised by the pre-determining step.

The first plurality of individual routes between the pairs of plane fields may comprise a first number of plane fields comprised / traversed by the first plurality of individual routes. The second plurality of individual routes between the pairs of plane fields may comprise a second number of plane fields comprised / traversed by the second plurality of individual routes. The first and second number of plane fields may be different. Each plane field may correspond to a respective module of the transport plane. Modules corresponding to / comprising only plane fields not comprised / traversed by the (first and / or second plurality of) individual routes may be switched off.

For the laboratory sample distribution system, the embodiments described above in connection with the method of operating a laboratory sample distribution system may be provided accordingly.

According to another aspect, a method of operating a laboratory sample distribution system is provided. The laboratory sample distribution system comprises a plurality of carriers having a number of n (n>3) carriers each configured to carry one or more sample containers containing a sample to be analyzed by laboratory devices (wherein the plurality of carriers may be a subset of a total plurality of carriers comprised by the laboratory sample distribution system); a transport plane assigned to the laboratory devices and configured to support to the plurality of carriers, wherein the transport plane comprises a plurality of interconnected transport modules comprising a plurality of plane fields (wherein at least one of the plane fields (each plane field) may only accept one carrier at a time and / or at least one of the plane fields (each plane field) may accept more than one carrier at a time); and a driving device configured to control movement of the plurality of carriers along individual routes between the plurality of plane fields, the movement comprising moving, in response to driving control signals, the plurality of carriers between neighboring plane fields of the plurality of plane fields along the individual routes.

The method is comprising (i) providing a plurality of route segments to be traveled, wherein for each of the plurality of carriers, a respective route segment to be traveled is provided along respective routes on the transport plane, each route segment being provided by one or more plane fields of the plurality of plane fields; and (ii) preventing, for the plurality of carriers, a deadlock arrangement on the transport plane in which the plurality of carriers block each other from further movement along the individual routes (wherein the prevention of the deadlock arrangement on the transport plane may take place off run-time, e.g. via simulations and / or calculations, in particular when designing routes or sections of the routes, and / or in runt-time). The preventing is further comprising (in the driving device): determining, at a present operation time, whether a deadlock arrangement for the plurality of carriers on the transport plane will (potentially or is likely to) occur at a future operation time in case the plurality of carriers are moved along the plurality of route segments. When it is determined that no deadlock will occur, moving the plurality of carriers along the plurality of route segments (each such moving may define a move). When it is determined that a deadlock will (potentially or is likely to) occur, moving the plurality of carriers in a supervised manner for avoiding the deadlock. Alternatively, the carriers can be moved in any case in a supervised manner.

Moving the plurality of carriers in a supervised manner for avoiding the deadlock may comprise moving the carriers one by one (along their respective route segments), checking each time whether moving the next carrier will cause the deadlock, and skipping moving a certain carrier or reducing its move length (e.g., number fields of the corresponding route segment) if it is determined that this moving will cause the deadlock.

The preventing may comprise determining a (minimum) number of (empty) fields that would complete a deadlock if they were occupied by carriers. Moving the plurality of carriers in a supervised manner for avoiding the deadlock may comprise, if the number of (empty) fields that would complete a deadlock if they were occupied by carriers is below a threshold (e.g., 2 or 3), skipping (preventing) moves of carriers that would end on one of the fields from the number of (empty) fields that would complete a deadlock (situation) (e.g., the last field of the fields of the respective route segment corresponds to one of the fields from the number of (empty) fields that would complete a deadlock). Alternatively or in addition, the move length (e.g., number of fields of the corresponding route segment) may be reduced.

Moving the plurality of carriers in a supervised manner for avoiding the deadlock may comprise preventing moving a carrier along its route segment in case this move ends up crossing a route of another carrier (e.g., the last field of the fields of the route segment is comprised by another carrier's route). Alternatively or in addition, the move length (e.g., number of fields of the corresponding route segment) may be reduced or increased.

According to another aspect, a laboratory sample distribution system is provided that is configured to execute at least some of the above-mentioned method steps.

For the laboratory sample distribution system, the embodiments described above in connection with the method of operating a laboratory sample distribution system may be provided accordingly.

Moreover, embodiments described above in connection with the different methods of operating a laboratory sample distribution system can be combined with each other.

### Description of further embodiments

In the following, embodiments, by way of example, are described with reference to figures. In the figures, show:
- Fig. 1: a graphical representation of a laboratory sample distribution system;
- Fig. 2: a graphical representation of a flow diagram of a method of operating a laboratory sample distribution system;
- Fig. 3A: a graphical representation of an example of a smallest deadlock;
- Fig. 3B: a graphical representation of an example of allowed movements for a carrier at a given plane field;
- Fig. 3C: a graphical representation of an example of carrier movements at a given plane field or location that are not allowed;
- Fig. 3D: a graphical representation of a specific pattern for allowed field-to-field (location-to-location) movements on the transport plane;
- Fig. 4: a graphical representation of a reserved track segment and a subsequent flagged plane field for a first carrier;
- Fig. 5: a graphical representation of a split route;
- Fig. 6A: a graphical representation of a situation which can lead to a deadlock;
- Fig. 6B: a graphical representation of the situation shown in Fig. 6A after carrier movants are performed; and
- Fig. 7: illustrates a strategy for avoiding a deadlock.

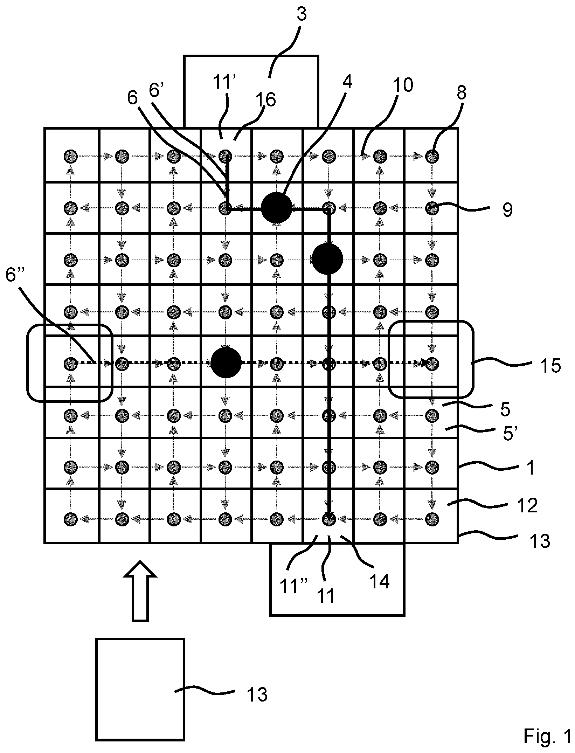

Fig. 1 shows a graphical representation of a laboratory sample distribution system. The laboratory sample distribution system comprises a plurality of carriers 4 configured to carry one or more sample containers containing a sample to be analyzed by laboratory devices 3, a transport plane 1 assigned to the laboratory devices 3 and providing support to the sample container carriers 4, and a driving device 13 configured to move, in response to driving control signals, the plurality of carriers 4 between plane fields or locations 5 provided on the transport plane 1.

The transport plane 1 is provided by a plurality of transport modules 12. The transport plane 1 may comprise a plurality of plane positions / logical fields 5. In the illustrated case, one plane position / logical field 5 defines one plane location 5'. Each transport module 12 is assigned a respective plane field or location 5. Each laboratory devices 3 is assigned one or more (local or adjacent) plane fields or locations 5.

Fig. 1 also shows a representation of a directed graph model 8 which is provided in an example for determining individual routes for the carriers 4 for travelling or moving between the plane fields or locations 5 (start plane field to end plane field). Alternative methods for determining individual routes for the carriers 4 in a given arrangement of plane fields, such methods known as such, may be applied.

In the example shown, the directed graph model 8 comprises a plurality of nodes 9 and a plurality of arcs 10 connecting the nodes 9. Each of the nodes 9 of the directed graph model 8 may correspond to a respective plane field 5. Alternatively, for a subset of the nodes 9, each node 9 may correspond to a respective plane field 5. Each of the arcs 9 of the directed graph model 8 may correspond to a movement between two respective plane fields 5. Alternatively, for a subset of the arcs 9, each arc 9 may correspond to a movement between two respective plane fields 5.

A laboratory device 3 is assigned one or more plane fields 5. One of these plane fields 5 (plane locations 5') can be a transfer field or location 16. Each laboratory device 3 is assigned to one or more transfer fields 16. Carriers 4 being located on a first transfer field assigned to a laboratory device can be transferred from this transfer field to the laboratory device. Alternatively, if carriers 4 with a sample are located on the first transfer field assigned to the laboratory device 3, the sample can be transferred from the first transfer field to the laboratory device 3. Carriers 4 being located in the laboratory device 3 can be transferred to a second transfer field assigned to the laboratory device 3. Alternatively, if carriers 4 without a sample are located on the second transfer field assigned to the laboratory device 3, a sample can be transferred from the laboratory device 3 to the carrier 4 on the second transfer field. The first and second transfer field may be assigned to the same laboratory device 3. The first and second transfer field may correspond to an input and an output of the laboratory device 3 (input plane field and output plane field). The first and second transfer field may correspond to the same or to different plane fields 5 assigned to the laboratory device 3. It is noted that only one carrier 4 can be provided on one plane field.

Via the transport plane 1, carriers 4 are moved between different plane fields 5. In particular, carriers 4 may be moved between pairs of plane fields 11. The movements may correspond to individual routes 6 for the carriers 4. A first plane field of the individual route 6 may provide for a start plane field and a last plane field of the individual route 6 for a destination plane field and vice versa. Start plane fields and destination plane fields may correspond to endpoint fields and / or pairs of plane fields 11. For each pair of plane fields 11, different individual routes 6 may be provided. Each pair of plane fields 11 may comprise two plane fields 5, e.g. a start plane field 11' and a destination plane field 11", i.e. two endpoint fields. First frequent endpoint field data indicative of a first selection of plane fields 14 most frequently providing for an end-point of a route 6 of traveling for the carriers 4 may be determined. This first selection of plane fields 14 may correspond to a first set of pairs of plane fields 11. The first set of pairs of plane fields 11 may correspond to transfer fields, in particular to transfer fields 16 frequently visited by carriers. Second frequent endpoint field data indicative of a second selection of plane fields 15 less frequently providing for an endpoint of a route 6 of traveling for the carriers 4 may be determined. This second selection of plane fields 15 may correspond to a second set of pairs of plane fields 11. The second selection 15 may not correspond to transfer fields 16. The second set of pairs of plane fields 11 may not correspond to transfer fields 16. The second set of pairs may comprise pairs 11 that do not correspond to the first selection 14 and / or pairs 11 in which one field of each pair 11 corresponds to the first selection 14 and the other field of each pair 11 corresponds to the second selection 15. The second set of pairs of plane fields 11 may correspond to transfer fields 16 less frequently visited by carriers 4. An alternating sequence of nodes 9 and arcs 10 can form a route 6, wherein the first and the last element is a node 9, these nodes 9 corresponding to a pair of plane fields 11.

Fig. 1 shows four endpoints. The four endpoints may correspond to a selection of plane fields 14, 15. Between these four endpoints more than twelve possible connection routes exist. However, for sake of simplification, Fig. 1 merely shows two routes. Each endpoint can form a pair of plane fields 11 with any of the other endpoints. Accordingly, these four endpoints can define twelve different pairs of plane fields 11. In general, m endpoints can define 2 · *b*(*m*, 2) = *m* · (*m* - 1) different pairs of plane fields 11 (here, b() is the binomial coefficient). However, according to the Fig. 1, two first endpoints 11', 11" correspond to the first selection of plane fields 14 and two other endpoints (second endpoints) correspond to the second selection of plane fields 15. The first endpoints may define a first pair of plane fields. The second endpoints may define a second pair of plane fields. A first traffic corresponding to the first pair of plane fields may be higher than a second traffic corresponding to the second pair of plane fields. Thus, the number of carriers 4 traveling between the first pair of plane fields may be higher than the number of carriers 4 traveling between the second pair of plane fields, e.g. in a given time interval.

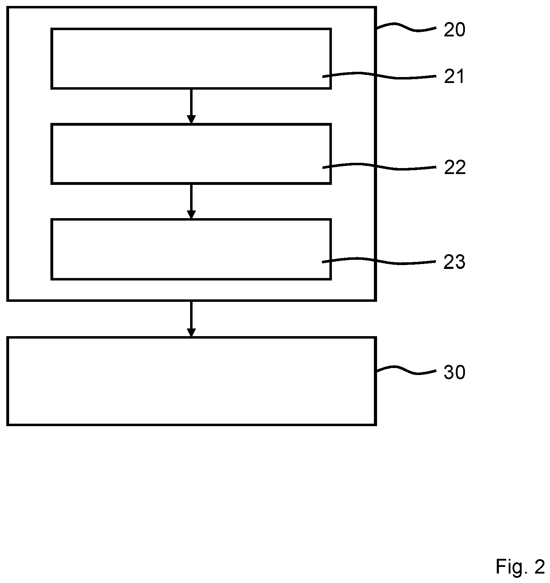

Fig. 2 shows a graphical representation of a flow diagram of a method of operating a laboratory sample distribution system. The method according to Fig. 2 comprises determining the individual routes 6 on the transport plane (step 20), e.g. depending on transfer fields, by one or more processors of a data processing device. Such determining may be conducted at runtime of the laboratory sample distribution system and / or prior to moving the carriers 4 on the transport plane 1, thereby, pre-determining (individual) off-line routes for the carriers 4 on the transport plane 1.

In the embodiment shown, the determining of the individual routes 6 comprises determining a directed graph model of the transport plane (step 21), wherein nodes 9 of the directed graph model 8 are assigned plane fields 5, and arcs 10 connecting the nodes 9 of the directed graph model 8 are assigned field-to-field movements between two plane fields 5. Further, a plurality of individual (e.g. off-line) routes 6 between pairs of plane fields from the plurality of plane fields 5 in the directed graph model is determined in step 22. The individual routes 6 determined may be applied for moving the carriers 4 on the transport plane 1.

As an option, an optimized set of individual routes may be determined from the plurality of individual routes 6 (step 23), such determining further comprising solving a mixed-integer optimization problem for the plurality of individual routes 6. Following, the driving device 30 may be controlling movement of the carriers 4 along the (optimized) individual routes 6 on the transport plane 1.

The pairs of plane fields 11 may comprise the first and second set of pairs of plane fields 11. The determining of the individual routes can comprise two runs, a first and a second determining. In the first determining, routes 6 for the first set of pairs of plane fields 11 may be determined, and in the second pre-determining, routes 6 for the second set of pairs of plane fields 11 may be determined. Alternatively, the determining of the plurality of individual routes between pairs of plane fields from the plurality of plane fields in the directed graph model 22 can comprise two runs, one for the first and one for the second set of pairs of plane fields 11. Alternatively, the determining of the optimized set of individual routes from the plurality of individual routes 6 can comprise two runs, one for the first and one for the second set of pairs of plane fields 11. In each case, the first run may be prioritized. The first run can be performed prior to the second run. During the second run, the routes determined via the first run may be fixed. In Fig. 1, the first route 6' may be calculated via a first run and the second route 6" may be calculated via a second run.

For example, the determining of the plurality of individual routes 6 between pairs of plane fields 11 from the plurality of plane fields 5 in the directed graph model can comprise a first run for determining first routes 6, and, independently therefrom, the determining of the plurality of individual routes between pairs of plane fields from the plurality of plane fields in the directed graph model 8 can comprise a second run for determining second individual routes. Subsequently, the first and second routes can be re-optimized depending on the first and second routes together and / or depending on (all) the pairs of plane fields 11. This subsequent step can correspond to the determining of the optimized set of individual routes from the plurality of individual routes 6.

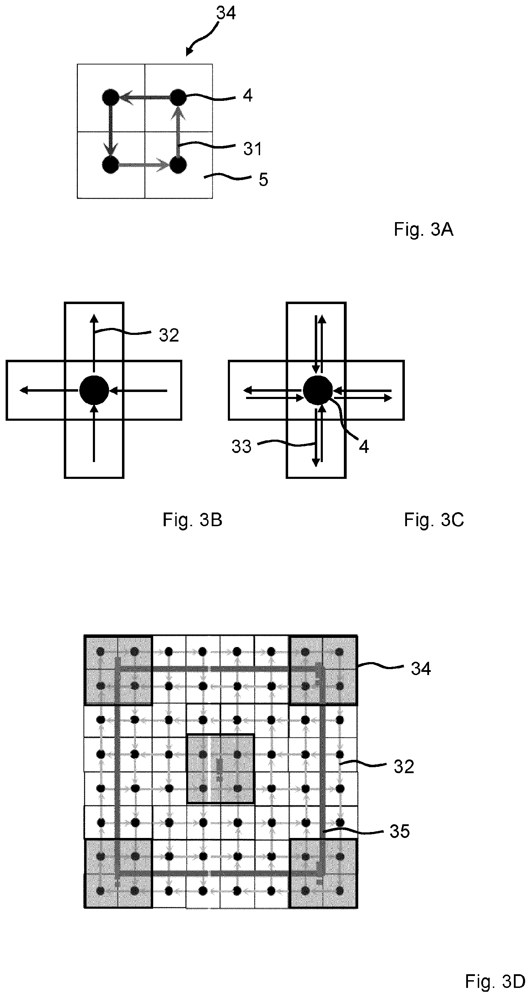

Fig. 3A shows a graphical representation of an example of a smallest deadlock if field-to-field (logical field / plane position) moves are possible for each field in only one X- and one Y-direction. In this case, four of the plurality of plane fields 5 of an area of 2x2 plane fields are occupied by four carriers 4. Thus, each of the four plane fields or locations is occupied by one carrier 4. For each plane field, with respect to the area of 2x2 plane fields, counterclockwise movements 31 to another plane field of the area of 2x2 plane fields are allowed. Furthermore, for each of the four carriers 4, such a movement is also intended. However, since each of the four plane fields is occupied, none of the four carriers 4 can reserve the following plane field and / or can perform the intended movement. This results in a deadlock.

Analogously, although not shown, other deadlock arrangement for more than four carriers may potentially happen at runtime of the laboratory sample distribution system. For example, a number of n (n>4) carriers 4 may be provided on a number of n plane fields, the plane fields arranged along a closed line or circle, thereby all carriers blocking each other from further movement to a next plane field already occupied by another one from the n carriers. An adjacency matrix corresponding to blocked carriers 4 may be provided in such alternative embodiments as well. Through matrix multiplications, it can be determined via the adjacent matrix if blocked carriers 4 form a circle, i.e. if blocked carriers form a deadlock.

Fig. 3B shows a graphical representation of an example of allowed movements 32 for a carrier 4 at a given plane field. At the given plane field, the carrier 4 may be allowed to move only in one X- and in one Y-direction. In Fig. 3B, the embodiment is shown that the carrier 4 is allowed to move in the X-direction left and in the Y-direction up. Fig. 3C, on the other hand, additionally illustrates carrier movements 33 at a given plane field 5 that are not allowed.

Fig. 3D shows a graphical representation of a specific pattern for allowed field-to-field movements 32 on the transport plane 1. In Fig. 3D, the transport plane 1 is divided in quadratic areas of 6x6 plane fields 35. Each area of 6x6 plane positions 35 corresponds to one transport module 12. The quadratic areas 35 can be cut at the edge of the transport plane 1. In the upper half of each quadratic area 35, the carriers 4 are allowed to move in the X-direction left, and in the lower half of each quadratic area 35, the carriers 4 are allowed to move in the X-direction right (only). In the left half of each quadratic area 35, the carriers 4 are allowed to move in the Y-direction down, and in the right half of each quadratic area 35, the carriers 4 are allowed to move in the Y-direction up (only). In this pattern, each quadratic area 35 comprises one area of 2x2 plane locations 34 in the center that can result in a deadlock. In this area of 2x2 plane fields 34, clockwise carrier movements are allowed. Moreover, the pattern comprises additional such areas of 2x2 plane fields 34, wherein each plane field 5 of each of the additional such areas of 2x2 plane fields 34 corresponds to a corner location 5 of a quadratic area 35. In Fig. 3D, each such area of 2x2 plane fields 34 (potentially forming a deadlock) is marked with an exclamation mark. The four plane positions involved in this 2x2 plane positions come from the 4 adjacent corners of 4 areas. There is one 6x6 area fully represented and 8 parts of 6x6 areas (only in part represented in Fig. 3D).

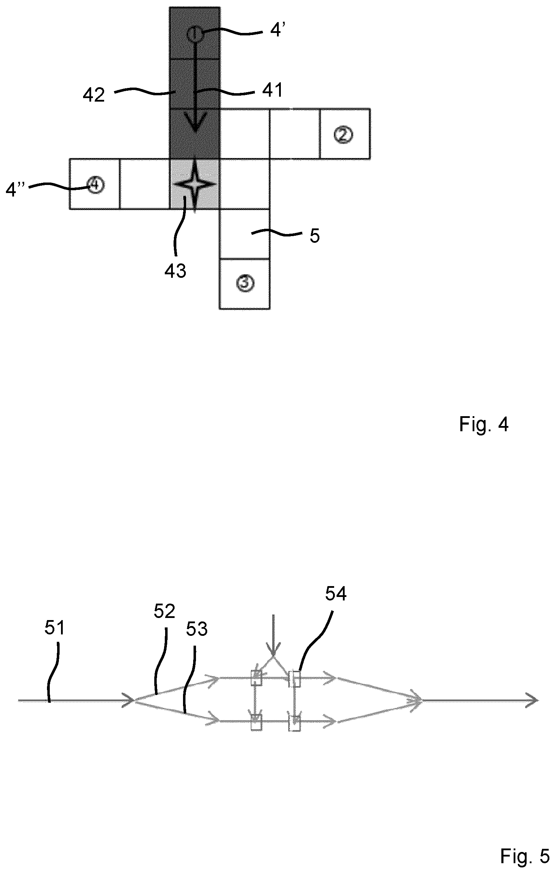

Fig. 4 shows a graphical representation of a reserved track segment 42 and a subsequent flagged plane position 43 for a first carrier 4'. Fig. 4 illustrates a method for preventing deadlocks. The first carrier 4' reserves a track segment 42 of plane position 5 along its route 41. The first plane position 5 of the segment 42 corresponds to the plane position 5 that the first carrier 4' would enter next, starting from its current plane position 5. Starting from the first plane position 5, the track segment 42 comprises of one or more immediately adjacent further plane positions 5 up to a last plane position 5 of the track segment 42. In Fig. 4, the track segment 42 comprises two plane positions 5, i.e. a first and a last. The plane positions 5 of the track segment 42 of the first carrier 4' may be reserved for the first carrier 4', i.e. these plane positions 5 may be blocked for carriers 4 other than the first carrier 4'. The plane position 5 on the route 41 of the first carrier 4' that follows directly after the last field of the segment 42 of the first carrier 4' can be flagged for the first carrier 4'. The flagged plane position 43 of the first carrier 4' may not be reserved by other carriers 4, i.e. the flagged plane position 43 may not be comprised by segments 42 of other carriers 4. In Fig. 4, in particular the fourth carrier 4" is thus not allowed to reserve the next two plane positions to the right of its current position, since it is not allowed to reserve the flagged plane position 43.

Fig. 5 shows a graphical representation of a split route 51. If the traffic of a determined route 51 has a high traffic, e.g. if the traffic exceeds a threshold, the route 51 may be divided in several sub routes 52, 53. In the case of Fig. 5, the route 51 with high traffic is divided in two sub routes 52, 53. The sub routes 52, 53 comprise overlapping sections, separating / merging sections and parallel sections. The traffic of the route 51 with high traffic may be divided 50 % to the upper route 52 and 50 % to the lower route 53. Alternatively, the traffic of the route 51 with high traffic may be distributed to the sub routes 52, 53 in a different weighting. For example, the shortest of the sub routes 52, 53 of the split route 51 may be provided with the highest percentage of the traffic. To avoid collisions at the crossings 54 of routes, the carriers 4 assigned to the split route 51 may alternatively follow one of the sub routes 52, 53.

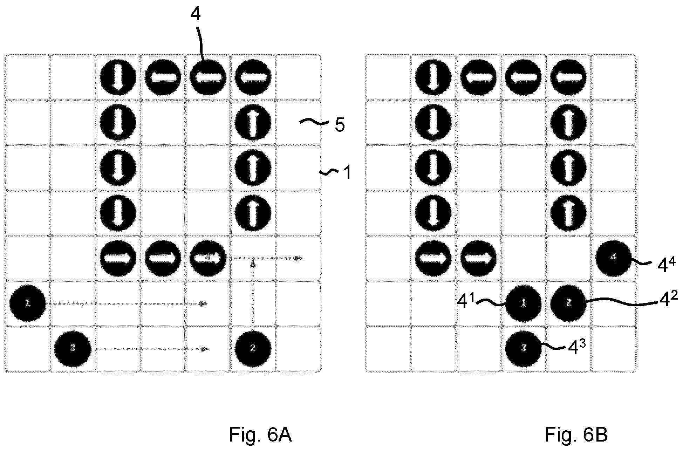

Fig. 6A shows a graphical representation of a situation which can lead to a deadlock. 1 Below, an example of an algorithm that avoids running into a deadlock is explained with respect to Fig. 6A. In a first step, the next set of moves for a subset (plurality) of carriers 4, namely carriers 4¹, 4², 4³, and 4⁴, are planned. In a next step, it is checked if these moves could end up in a deadlock. If this is not the case, the planned moves can be executed. If these moves could end up in a deadlock, the list of planned moves is worked down, checking one by one if it the next move would create a deadlock. A move that would create a deadlock is prevented. Alternatively, the move length can be reduced in such a way that no deadlock is caused. Referring to the example of Fig. 6A, it is noted that the move of carrier 4¹ can be safely executed. Moving carrier 4² will cause a deadlock. Hence, the move for carrier 2 can either be skipped or the move length can be reduced in such a way that is does not cause a deadlock. The move of carrier 4³ can be safely executed. The move of carrier 4⁴ can also be safely executed and would even reduce the deadlock risk. Fig. 6B shows a graphical representation of the situation shown in Fig. 6A after carrier movements are performed.

In the case shown in Fig. 6A, the situation depicted is only one position away from a deadlock, i.e. there is only one (empty) field 5 that would complete a deadlock if it were occupied by a carrier 4.

There may be one or more (empty) fields 5 that would complete a deadlock if occupied by carriers 4 (remaining open *"side"*)*.* It may be forbidden to move a carrier 4 onto such a remaining open *"side".* In this case, for instance, a route from left to right for carrier 4⁴ is prohibited. If it is determined that only n (or less) free positions are remaining until a deadlock occurs, where n is configurable (n > 0), movements of carriers 4 ending at one of these positions may be prohibited.

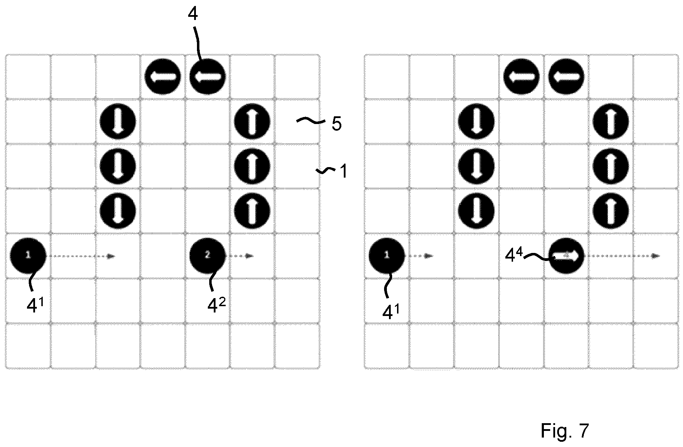

Fig. 7 illustrates a strategy for avoiding a deadlock. In this case, carrier moves that end on a crossing with other routes 6 are prohibited. Hence, the moves of carriers 4¹ and 4² on the left side of Fig. 7 are not allowed as they would end on a crossing with vertical routes 6. However, their moves can be shortened or lengthened to put them in a condition of allowance (cf. right side of Fig. 7).

## Claims

1. Method of operating a laboratory sample distribution system, wherein the laboratory sample distribution system comprises:
- a plurality of carriers (4) having a number of n (n>3) carriers (4) each configured to carry one or more sample containers containing a sample to be analyzed by laboratory devices (3);
- a transport plane (1) assigned to the laboratory devices (3) and configured to support to the plurality of carriers (4), wherein the transport plane (1) comprises a plurality of interconnected transport modules comprising a plurality of plane fields (5); and
- a driving device (13) configured to control movement of the plurality of carriers (4) along individual routes between the plurality of plane fields (5), the movement comprising moving, in response to driving control signals, the plurality of carriers (4) be-tween neighboring plane fields of the plurality of plane fields (5) along the individual routes (6);
the method comprising
- moving the plurality of carriers (4) along the individual routes on the transport plane (1), wherein the moving, for each carrier, comprises executing at least once steps of reserving a route segment along the individual route, the route segment being provided by one or more plane fields of the plurality of plane fields (5), and moving the carrier (4) along the route segment; and
- preventing, for the plurality of carriers (4), a deadlock arrangement on the transport plane in which the plurality of carriers (4) block each other from further movement along the individual routes (6), comprising determining, at a present operation time, a potential deadlock arrangement for the plurality of carriers (4) on the transport plane (1) at a future operation time, wherein the potential deadlock arrangement is assigned a number of n deadlock plane fields occupied by the plurality of carriers (4) in case of the potential deadlock arrangement;
**characterized in that** the preventing is further comprising
- for a first carrier from the plurality of carriers (4) moving along a first individual route, reserving a first route segment ending with a first end plane field; and
- assigning a non-reserve flag to a next plane field (43) which is next to the first end plane field along the first individual route, wherein
- the first end plane field provides for a first deadlock plane field of the n deadlock plane fields,
- the next plane field (43) provides for a second deadlock plane field of the n deadlock plane fields, and
- the assigning of the non-reserve flag to the next plane field (43) is preventing all remaining carriers from the plurality of carriers (4) from reserving, along a second individual route, a second route segment which is assigned the next plane field (43) as a second end plane field to be occupied by one of the remaining carriers at least a the future operation time.

2. Method of claim 1, wherein the determining comprises determining a potential closed sequence deadlock arrangement in which the plurality of carriers (4) are provided on plane fields arranged in a closed sequence of plane fields.

3. Method of claim 1 or 2, wherein the moving of the plurality of carriers (4) comprises restricting movement for each carrier from the plurality of carriers (4) to only a single vertical direction and a single horizontal direction of the transport plane.

4. Method of at least one of the preceding claims, wherein the preventing comprises providing flag data in the driving device (13) indicative of the next plane field (43) assigned the non-reserve flag, and updating the flag data in case one of the following is provided: assigning the next plane field (43) the non-reserve flag, and terminating assignment of the non-reserve flag for the next plane field (43).

5. Method of claim 4, wherein reserving of the second route segment comprises looking up the flag data and verifying the second end field of the second route segment being not assigned a non-reserve flag.

6. Method of at least one of the preceding claims, wherein the moving of the plurality of carriers (4) along the individual routes (6) comprises
- determining a model representing the transport plane (1) with plane locations (5') and location-to-location movements between plane locations (5') associated to the plurality of carriers (4);
- calculating an optimized set of individual routes between pairs of plane locations from the plurality of plane locations (5') using the model, the calculating comprising solving an optimization problem in which routes between the pairs of plane locations are simultaneously mutually optimized; and
- providing the optimized set of individual routes as individual routes (6) on the transport plane (1).

7. Method of claim 6, wherein the model is a directed graph model (8) of the transport plane (1), wherein nodes (9) of the directed graph model (8) are assigned plane locations (5') and arcs (10) connecting the nodes (9) of the directed graph model (8) are assigned location-to-location movements between two plane locations (5').

8. Method of claim 6 or 7, wherein the optimization problem is one of the following:
- a multi-commodity flow problem, in particular a multi-commodity flow problem in a directed graph;
- a shortest path problem;
- a minimum flow problem;
- a travelling salesman problem; and
- a graph coloring problem.

9. Method of at least one of the claims 6 to 8, wherein the optimization problem is solved by applying a MIP-solver.

10. Method of claim 7, further comprising
- providing first frequent endpoint location data indicative of a first selection of plane locations most frequently providing for an endpoint of an individual route; and
- determining the directed graph model (8) of the transport plane (1), wherein first nodes (9) of the directed graph model (8) are assigned the plane locations from the first selection of plane locations and first arcs (10) starting and / or ending at the first nodes (9) of the directed graph model (8) are assigned location-to-location movements from and / or to plane locations from the first selection of plane locations.

11. Method of claim 7 or 10, further comprising
- providing second frequent endpoint location data indicative of a second selection of plane locations less frequently providing for an endpoint of an individual route (6), wherein the second selection of plane locations is different from the first selection of plane locations; and
- determining the directed graph model (8) of the transport plane (1), wherein second nodes (9) of the directed graph model (8) are assigned the plane locations from the second selection of plane locations and second arcs (10) starting and / or ending at the second nodes (9) of the directed graph model (8) are assigned location-to-location movements from and / or to plane locations from the second selection of plane locations.

12. Method of at least one of the claims 6 to 11, further comprising
- providing traffic data indicative of a predicted number of carriers (4) moving between the pairs of plane locations in a time interval; and
- calculating the optimized set of individual routes between pairs of plane locations from the plurality of plane locations (5') in dependence on the predicted number of carriers (4) travelling between the pairs of plane locations (11).

13. Method of claim 12, wherein the providing of traffic data further comprises at least one of:
- providing traffic data determined from a sample order listing;
- providing traffic data determined from historical data indicative of historical operation of the laboratory sample distribution system;
- providing traffic data determined from workflow data indicative of a workflow for the one or more sample containers to be carried by the plurality of carriers (4); and
- providing traffic data determined from a measured current and / or recent number of carriers (4) transported.

14. Method of at least one of the claims 6 to 13, wherein the calculating of the optimized set of individual routes between pairs of plane locations from the plurality of plane locations (5') further comprises applying at least one constraint selected from the following group:
- minimizing a route length of each individual route;
- minimizing a weighted route length of each of the individual routes;
- minimizing a number of route curves for each individual route;
- minimizing a number of individual routes joining another individual route;
- uniformly distributing carrier traffic per plane field (5);
- limiting field-to-field movements between two plane fields (5) to movement between adjacent plane fields only;
- excluding plane fields (5) reserved for carrier queuing;
- uniformly distributing predicted wear of plane fields over the plurality of plane fields (5) of the transport plane (1);
- minimizing the energy consumption of the laboratory sample distribution system; and
- minimizing / avoiding areas of 2x2 plane positions with four crossings.

15. Method of at least one of the preceding claims, wherein the preventing of the deadlock arrangement on the transport plane (1) further comprises preventing moving a carrier (4) along a corresponding route segment in case a last field (5) of the fields (5) of the corresponding route segment is comprised by the individual route (6) of another carrier (4).

16. A laboratory sample distribution system, comprising:
- a plurality of carriers (4) having a number of n (n>3) carriers (4) each configured to carry one or more sample containers containing a sample to be analyzed by laboratory devices (3);
- a transport plane (1) assigned to the laboratory devices (3) and configured to support to the plurality of carriers (4), wherein the transport plane (1) comprises a plurality of interconnected transport modules comprising a plurality of plane fields (5); and
- a driving device (13) configured to control movement of the plurality of carriers (4) along individual routes (6) the plurality of plane fields (5), the movement comprising moving, in response to driving control signals, the plurality of carriers (4) between neighboring plane fields of the plurality of plane fields along the individual routes;
the system configured to implement the method of at least one of the preceding claims.

17. A laboratory automation system, comprising a laboratory sample distribution system of claim 16 and a plurality of laboratory devices (3).

18. The laboratory automation system of claim 17, wherein the plurality of laboratory devices (3) comprises one or more laboratory devices selected from the following: laboratory device for pre-analytics; laboratory device for sample analysis; and laboratory device for post-analytics.

## Patentansprüche

1. Verfahren zum Betrieb eines Laborprobenverteilungssystems, wobei das Laborprobenverteilungssystem Folgendes umfasst:
- eine Vielzahl von Trägern (4) mit einer Anzahl von n (n>3) Trägern (4), die jeweils eingerichtet sind, einen oder mehrere Probenbehälter zu tragen, die eine Probe enthalten, die von Laborvorrichtungen (3) zu analysieren ist;
- eine Transportebene (1), die den Laborvorrichtungen (3) zugeordnet und eingerichtet ist, die Vielzahl von Trägern (4) zu stützen, wobei die Transportebene (1) eine Vielzahl von miteinander verbundenen Transportmodulen umfasst, die eine Vielzahl von Ebenenfeldern (5) umfassen; und
- eine Antriebsvorrichtung (13), die eingerichtet ist, die Bewegung der Vielzahl von Trägern (4) entlang einzelner Routen zwischen der Vielzahl von Ebenenfeldern (5) zu steuern, wobei die Bewegung als Reaktion auf Antriebssteuersignale ein Bewegen der Vielzahl von Trägern (4) zwischen benachbarten Ebenenfeldern der Vielzahl von Ebenenfeldern (5) entlang der einzelnen Routen (6) umfasst;
wobei das Verfahren Folgendes umfasst:
- Bewegen der Vielzahl von Trägern (4) entlang der einzelnen Routen auf der Transportebene (1), wobei das Bewegen für jeden Träger ein mindestens einmaliges Ausführen von Schritten des Reservierens eines Routensegments entlang der einzelnen Route, wobei das Routensegment durch ein oder mehrere Ebenenfelder der Vielzahl von Ebenenfeldern (5) bereitgestellt wird, und ein Bewegen des Trägers (4) entlang des Routensegments umfasst; und
- Verhindern einer Deadlock-Situation für die Vielzahl von Trägern (4) auf der Transportebene, in der die Vielzahl von Trägern (4) eine weitere Bewegung entlang der einzelnen Routen (6) gegenseitig blockieren, umfassend ein Bestimmen, zu einer gegenwärtigen Betriebszeit, einer potentiellen Deadlock-Situation für die Vielzahl von Trägern (4) auf der Transportebene (1) zu einer zukünftigen Betriebszeit, wobei der potentiellen Deadlock-Situation eine Anzahl von n Deadlock-Ebenenfeldern zugeordnet ist, die von der Vielzahl von Trägern (4) im Fall der potentiellen Deadlock-Situation belegt werden;
**dadurch gekennzeichnet, dass** das Verhindern ferner Folgendes umfasst:
- Reservieren eines ersten Routensegments, das mit einem ersten Endebenenfeld endet, für einen ersten Träger aus der Vielzahl von Trägern (4), der sich entlang einer ersten einzelnen Route bewegt; und
- Zuordnen eines Nichtreservierungs-Flags zu einem nächsten Ebenenfeld (43), das sich entlang der ersten einzelnen Route neben dem ersten Endebenenfeld befindet,
wobei
- das erste Endebenenfeld ein erstes Deadlock-Ebenenfeld der n Deadlock-Ebenenfelder bereitstellt,
- das nächste Ebenenfeld (43) ein zweites Deadlock-Ebenenfeld der n Deadlock-Ebenenfelder bereitstellt und
- das Zuordnen des Nichtreservierungs-Flags zu dem nächsten Ebenenfeld (43) alle verbleibenden Träger aus der Vielzahl von Trägern (4) daran hindert, entlang einer zweiten einzelnen Route ein zweites Routensegment zu reservieren, dem das nächste Ebenenfeld (43) als ein zweites Endebenenfeld zugeordnet ist, das mindestens zu der zukünftigen Betriebszeit von einem der verbleibenden Träger belegt werden soll.

2. Verfahren nach Anspruch 1, wobei das Bestimmen das Bestimmen einer potentiellen Deadlock-Situation mit geschlossener Sequenz umfasst, in der die Vielzahl von Trägern (4) auf Ebenenfeldern bereitgestellt wird, die in einer geschlossenen Sequenz von Ebenenfeldern angeordnet sind.

3. Verfahren nach Anspruch 1 oder 2, wobei das Bewegen der Vielzahl von Trägern (4) das Beschränken der Bewegung für jeden Träger aus der Vielzahl von Trägern (4) auf nur eine einzige vertikale Richtung und eine einzige horizontale Richtung der Transportebene umfasst.

4. Verfahren nach mindestens einem der vorhergehenden Ansprüche, wobei das Verhindern das Bereitstellen von Flag-Daten in der Antriebsvorrichtung (13), die das nächste Ebenenfeld (43) angeben, dem das Nichtreservierungs-Flag zugeordnet ist, und das Aktualisieren der Flag-Daten umfasst, falls eines der Folgenden bereitgestellt wird: Zuordnen des Nichreservierungs-Flags zu dem nächsten Ebenenfeld (43) und Beenden der Zuordnung des Nichtreservierungs-Flags für das nächste Ebenenfeld (43).

5. Verfahren nach Anspruch 4, wobei das Reservieren des zweiten Routensegments das Suchen der Flag-Daten und das Verifizieren umfasst, dass dem zweiten Endfeld des zweiten Routensegments kein Nichtreservierungs-Flag zugeordnet ist.

6. Verfahren nach mindestens einem der vorhergehenden Ansprüche, wobei das Bewegen der Vielzahl von Trägern (4) entlang der einzelnen Routen (6) Folgendes umfasst:
- Bestimmen eines Modells, das die Transportebene (1) mit Ebenenpositionen (5') und Position-zu-Position-Bewegungen zwischen Ebenenpositionen (5') darstellt, die der Vielzahl von Trägern (4) zugewiesen sind;
- Berechnen eines optimierten Satzes von einzelnen Routen zwischen Paaren von Ebenenpositionen aus der Vielzahl von Ebenenpositionen (5') unter Verwendung des Modells, wobei das Berechnen das Lösen eines Optimierungsproblems umfasst, bei dem Routen zwischen den Paaren von Ebenenpositionen gleichzeitig gegenseitig optimiert werden; und
- Bereitstellen des optimierten Satzes von einzelnen Routen als einzelne Routen (6) auf der Transportebene (1).

7. Verfahren nach Anspruch 6, wobei das Modell ein gerichtetes Graphenmodell (8) der Transportebene (1) ist, wobei Knoten (9) des gerichteten Graphenmodells (8) Ebenenpositionen (5') zugeordnet sind und Bögen (10), die die Knoten (9) des gerichteten Graphenmodells (8) verbinden, Position-zu-Position-Bewegungen zwischen zwei Ebenenpositionen (5') zugeordnet sind.

8. Verfahren nach Anspruch 6 oder 7, wobei das Optimierungsproblem eines der Folgenden ist:
- ein Mehrgüterflussproblem, insbesondere ein Mehrgüterflussproblem in einem gerichteten Graphen;
- ein Kürzeste-Pfade-Problem;
- ein Minimaler-Fluss-Problem;
- ein Problem des Handlungsreisenden; und
- ein Graphenfärbungsproblem.

9. Verfahren nach mindestens einem der Ansprüche 6 bis 8, wobei das Optimierungsproblem durch Anwenden eines MIP-Solvers gelöst wird.

10. Verfahren nach Anspruch 7, ferner umfassend:
- Bereitstellen von ersten häufigen Endpunktpositionsdaten, die eine erste Auswahl von Ebenenpositionen angeben, die am häufigsten für einen Endpunkt einer einzelnen Route bereitgestellt werden; und
- Bestimmen des gerichteten Graphenmodells (8) der Transportebene (1), wobei ersten Knoten (9) des gerichteten Graphenmodells (8) die Ebenenpositionen aus der ersten Auswahl von Ebenenpositionen zugeordnet sind und ersten Bögen (10), die an den ersten Knoten (9) des gerichteten Graphenmodells (8) beginnen und/oder enden, Position-zu-Position-Bewegungen von und/oder zu Ebenenpositionen aus der ersten Auswahl von Ebenenpositionen zugeordnet sind.

11. Verfahren nach Anspruch 7 oder 10, ferner umfassend:
- Bereitstellen von zweiten häufigen Endpunktpositionsdaten, die eine zweite Auswahl von Ebenenpositionen angeben, die weniger häufig für einen Endpunkt einer einzelnen Route (6) bereitgestellt werden, wobei sich die zweite Auswahl von Ebenenpositionen von der ersten Auswahl von Ebenenpositionen unterscheidet; und
- Bestimmen des gerichteten Graphenmodells (8) der Transportebene (1), wobei zweiten Knoten (9) des gerichteten Graphenmodells (8) die Ebenenpositionen aus der zweiten Auswahl von Ebenenpositionen zugeordnet sind und zweiten Bögen (10), die an den zweiten Knoten (9) des gerichteten Graphenmodells (8) beginnen und/oder enden, Position-zu-Position-Bewegungen von und/oder zu Ebenenpositionen aus der zweiten Auswahl von Ebenenpositionen zugeordnet sind.

12. Verfahren nach mindestens einem der Ansprüche 6 bis 11, ferner umfassend:
- Bereitstellen von Verkehrsdaten, die eine vorhergesagte Anzahl von Trägern (4) angeben, die sich in einem Zeitintervall zwischen den Paaren von Ebenenpositionen bewegen; und
- Berechnen des optimierten Satzes von einzelnen Routen zwischen Paaren von Ebenenpositionen aus der Vielzahl von Ebenenpositionen (5') in Abhängigkeit von der vorhergesagten Anzahl von Trägern (4), die sich zwischen den Paaren von Ebenenpositionen (11) bewegen.

13. Verfahren nach Anspruch 12, wobei das Bereitstellen von Verkehrsdaten ferner mindestens eines der Folgenden umfasst:
- Bereitstellen von Verkehrsdaten, die aus einer Probenauftragsliste bestimmt werden;
- Bereitstellen von Verkehrsdaten, die aus historischen Daten bestimmt werden, die einen historischen Betrieb des Laborprobenverteilungssystems angeben;
- Bereitstellen von Verkehrsdaten, die aus Arbeitsablaufdaten bestimmt werden, die einen Arbeitsablauf für den einen oder die mehreren Probenbehälter angeben, die von der Vielzahl von Trägern (4) getragen werden sollen; und
- Bereitstellen von Verkehrsdaten, die aus einer gemessenen aktuellen und/oder jüngsten Anzahl von transportierten Trägern (4) bestimmt werden.

14. Verfahren nach mindestens einem der Ansprüche 6 bis 13, wobei das Berechnen des optimierten Satzes von einzelnen Routen zwischen Paaren von Ebenenpositionen aus der Vielzahl von Ebenenpositionen (5') ferner das Anwenden mindestens einer Einschränkung umfasst, ausgewählt aus der folgenden Gruppe:
- Minimieren einer Routenlänge jeder einzelnen Route;
- Minimieren einer gewichteten Routenlänge jeder der einzelnen Routen;
- Minimieren einer Anzahl von Routenkurven für jede einzelne Route;
- Minimieren einer Anzahl von einzelnen Routen, die sich einer anderen einzelnen Route anschließen;
- gleichmäßiges Verteilen von Trägerverkehr pro Ebenenfeld (5);
- Begrenzen von Feld-zu-Feld-Bewegungen zwischen zwei Ebenenfeldern (5) auf die Bewegung nur zwischen benachbarten Ebenenfeldern;
- Ausschließen von Ebenenfeldern (5), die für einen Trägerwartebereich reserviert sind;
- gleichmäßiges Verteilen des vorhergesagten Verschleißes von Ebenenfeldern über die Vielzahl von Ebenenfeldern (5) der Transportebene (1);
- Minimieren des Energieverbrauchs des Laborprobenverteilungssystems; und
- Minimieren/Vermeiden von Bereichen von 2x2-Ebenenpositionen mit vier Kreuzungen.

15. Verfahren nach mindestens einem der vorhergehenden Ansprüche, wobei das Verhindern der Deadlock-Situation auf der Transportebene (1) ferner ein Verhindern des Bewegens eines Trägers (4) entlang eines entsprechenden Routensegments umfasst, falls ein letztes Feld (5) der Felder (5) des entsprechenden Routensegments von der einzelnen Route (6) eines anderen Trägers (4) umfasst wird.

16. Laborprobenverteilungssystem, umfassend:
- eine Vielzahl von Trägern (4) mit einer Anzahl von n (n>3) Trägern (4), die jeweils eingerichtet sind, einen oder mehrere Probenbehälter zu tragen, die eine Probe enthalten, die von Laborvorrichtungen (3) zu analysieren ist;
- eine Transportebene (1), die den Laborvorrichtungen (3) zugeordnet und eingerichtet ist, die Vielzahl von Trägern (4) zu stützen, wobei die Transportebene (1) eine Vielzahl von miteinander verbundenen Transportmodulen umfasst, die eine Vielzahl von Ebenenfeldern (5) umfassen; und
- eine Antriebsvorrichtung (13), die eingerichtet ist, eine Bewegung der Vielzahl von Trägern (4) entlang einzelner Routen (6) zwischen der Vielzahl von Ebenenfeldern (5) zu steuern, wobei die Bewegung als Reaktion auf Antriebssteuersignale das Bewegen der Vielzahl von Trägern (4) zwischen benachbarten Ebenenfeldern der Vielzahl von Ebenenfeldern entlang der einzelnen Routen umfasst;
wobei das System eingerichtet ist, das Verfahren nach mindestens einem der vorhergehenden Ansprüche zu implementieren.

17. Laborautomatisierungssystem, umfassend ein Laborprobenverteilungssystem nach Anspruch 16 und eine Vielzahl von Laborvorrichtungen (3).

18. Laborautomatisierungssystem nach Anspruch 17, wobei die Vielzahl von Laborvorrichtungen (3) eine oder mehrere Laborvorrichtungen umfasst, die aus den Folgenden ausgewählt sind: Laborvorrichtung für die Präanalytik; Laborvorrichtung für die Probenanalyse; und Laborvorrichtung für die Postanalytik.

## Revendications

1. Procédé permettant de faire fonctionner un système de distribution des échantillons de laboratoire, dans lequel le système de distribution des échantillons de laboratoire comprend :
- une pluralité de supports (4) ayant un nombre de n (n>3) supports (4) chacun configuré pour porter un ou plusieurs récipients d'échantillon contenant un échantillon à analyser par des dispositifs de laboratoire (3) ;
- un plan de transport (1) attribué aux dispositifs de laboratoire (3) et configuré pour supporter la pluralité de supports (4), le plan de transport (1) comprenant une pluralité de modules de transport interconnectés comprenant une pluralité de champs plans (5) ; et
- un dispositif d'entraînement (13) configuré pour commander le mouvement de la pluralité de supports (4) le long de trajets individuels entre la pluralité de champs plans (5), le mouvement comprenant le déplacement, en réponse à des signaux de commande d'entraînement, de la pluralité de supports (4) entre des champs plans voisins de la pluralité de champs plans (5) le long des trajets individuels (6) ;
le procédé comprenant
- le déplacement de la pluralité de supports (4) le long des trajets individuels sur le plan de transport (1), le déplacement, pour chaque support, comprenant l'exécution au moins une fois des étapes de réservation d'un segment de trajet le long du trajet individuel, le segment de trajet étant fourni par un ou plusieurs champs plans de la pluralité de champs plans (5), et le déplacement du support (4) le long du segment de trajet ; et
- la prévention, pour la pluralité de supports (4), d'un agencement d'interblocage sur le plan de transport dans lequel la pluralité de supports (4) bloquent mutuellement tout mouvement supplémentaire le long des trajets individuels (6), comprenant la détermination, à un temps de fonctionnement présent, d'un agencement d'interblocage potentiel pour la pluralité de supports (4) sur le plan de transport (1) à un temps de fonctionnement futur, l'agencement d'interblocage potentiel se voyant attribuer un nombre de n champs plans d'interblocage occupés par la pluralité de supports (4) dans le cas de l'agencement d'interblocage potentiel ;
**caractérisé en ce que** la prévention comprend en outre
- pour un premier support parmi la pluralité de supports (4) se déplaçant le long d'un premier trajet individuel, la réservation d'un premier segment de trajet se finissant par un premier champ plan d'extrémité ; et
- l'attribution d'un indicateur de non-réservation à un champ plan suivant (43) qui est adjacent au premier champ plan d'extrémité le long du premier trajet individuel, dans lequel
- le premier champ plan d'extrémité fournit un premier champ plan d'interblocage des n champs plans d'interblocage,
- le champ plan suivant (43) fournit un deuxième champ plan d'interblocage des n champs plans d'interblocage, et
- l'attribution de l'indicateur de non-réservation au champ plan suivant (43) empêche tous les supports restants parmi la pluralité de supports (4) de réserver, le long d'un deuxième trajet individuel, un deuxième segment de trajet qui se voit attribuer le champ plan suivant (43) en tant que deuxième champ plan d'extrémité à occuper par l'un des supports restants au moins à un temps de fonctionnement futur.

2. Procédé selon la revendication 1, dans lequel la détermination comprend la détermination d'un agencement d'interblocage en séquence fermée potentiel dans lequel la pluralité de supports (4) sont fournis sur des champs plans agencés en une séquence fermée de champs plans.

3. Procédé selon la revendication 1 ou 2, dans lequel le déplacement de la pluralité de supports (4) comprend la restriction du mouvement pour chaque support parmi la pluralité de supports (4) à uniquement une direction verticale unique et une direction horizontale unique du plan de transport.

4. Procédé selon au moins l'une des revendications précédentes, dans lequel la prévention comprend la fourniture de données d'indicateur dans le dispositif d'entraînement (13) indicatives du champ plan suivant (43) auquel a été attribué l'indicateur de non-réservation, et la mise à jour des données d'indicateur dans le cas où l'un des suivants est fourni : attribution au champ plan suivant (43) de l'indicateur de non-réservation, et achèvement de l'attribution de l'indicateur de non-réservation pour le champ plan suivant (43).

5. Procédé selon la revendication 4, dans lequel la réservation du deuxième segment de trajet comprend la consultation des données d'indicateur et la vérification que le deuxième champ d'extrémité du deuxième segment de trajet ne s'est pas vu attribuer un indicateur de non-réservation.

6. Procédé selon au moins l'une des revendications précédentes, dans lequel le déplacement de la pluralité de supports (4) le long des trajets individuels (6) comprend
- la détermination d'un modèle représentant le plan de transport (1) avec des emplacements plans (5') et des mouvements d'emplacement à emplacement entre des emplacements plans (5') associés à la pluralité de supports (4) ;
- le calcul d'un ensemble optimisé de trajets individuels entre des paires d'emplacements plans parmi la pluralité d'emplacements plans (5') en utilisant le modèle, le calcul comprenant la résolution d'un problème d'optimisation dans lequel des trajets entre les paires d'emplacements plans sont simultanément mutuellement optimisés ; et
- la fourniture de l'ensemble optimisé de trajets individuels en tant que trajets individuels (6) sur le plan de transport (1).

7. Procédé selon la revendication 6, dans lequel le modèle est un modèle de graphe dirigé (8) du plan de transport (1), dans lequel des nœuds (9) du modèle de graphe dirigé (8) se voient attribuer des emplacements plans (5') et des arcs (10) reliant les nœuds (9) du modèle de graphe dirigé (8) se voient attribuer des mouvements d'emplacement à emplacement entre deux emplacements plans (5').

8. Procédé selon la revendication 6 ou 7, dans lequel le problème d'optimisation est l'un des suivants :
- un problème de flot multi-commodités, en particulier un problème de flot multi-commodités dans un graphe dirigé ;
- un problème de trajet plus court ;
- un problème de flot minimal ;
- un problème de voyageur de commerce ; et
- un problème de coloration de graphe.

9. Procédé selon au moins l'une des revendications 6 à 8, dans lequel le problème d'optimisation est résolu en appliquant un solveur MIP.

10. Procédé selon la revendication 7, comprenant en outre
- la fourniture de premières données d'emplacements de points finaux fréquents indicatives d'une première sélection d'emplacements plans fournissant le plus fréquemment un point final d'un trajet individuel ; et
- la détermination du modèle de graphe dirigé (8) du plan de transport (1), les premiers nœuds (9) du modèle de graphe dirigé (8) se voyant attribuer les emplacements plans parmi la première sélection d'emplacements plans et les premiers arcs (10) démarrant et/ou finissant au niveau des premiers nœuds (9) du modèle de graphe dirigé (8) se voyant attribuer des mouvements d'emplacement à emplacement depuis et/ou vers des emplacements plans parmi la première sélection d'emplacements plans.

11. Procédé selon la revendication 7 ou 10, comprenant en outre
- la fourniture de deuxièmes données d'emplacements de points finaux fréquents indicatives d'une deuxième sélection d'emplacements plans fournissant moins fréquemment un point final d'un trajet individuel (6), la deuxième sélection d'emplacements plans étant différente de la première sélection d'emplacements plans ; et
- la détermination du modèle de graphe dirigé (8) du plan de transport (1), les deuxièmes nœuds (9) du modèle de graphe dirigé (8) se voyant attribuer les emplacements plans parmi la deuxième sélection d'emplacements plans et les deuxièmes arcs (10) démarrant et/ou finissant au niveau des deuxièmes nœuds (9) du modèle de graphe dirigé (8) se voyant attribuer des mouvements d'emplacement à emplacement depuis et/ou vers des emplacements plans parmi la deuxième sélection d'emplacements plans.

12. Procédé selon au moins l'une des revendications 6 à 11, comprenant en outre
- la fourniture de données de trafic indicatives d'un nombre prédit de supports (4) se déplaçant entre les paires d'emplacements plans dans un intervalle de temps ; et
- le calcul de l'ensemble optimisé de trajets individuels entre des paires d'emplacements plans parmi la pluralité d'emplacements plans (5') en fonction du nombre prédit de supports (4) circulant entre les paires d'emplacements plans (11).

13. Procédé selon la revendication 12, dans lequel la fourniture de données de trafic comprend en outre au moins une parmi :
- la fourniture de données de trafic déterminées à partir d'une liste de demandes d'échantillons ;
- la fourniture de données de trafic déterminées à partir de données historiques indicatives du fonctionnement historique du système de distribution des échantillons de laboratoire ;
- la fourniture de données de trafic déterminées à partir de données de flux de travail indicatives d'un flux de travail pour le ou les récipients d'échantillon à faire porter par la pluralité de supports (4) ; et
- la fourniture de données de trafic déterminées à partir d'un nombre mesuré actuel et/ou récent de supports (4) transportés.

14. Procédé selon au moins l'une des revendications 6 à 13, dans lequel le calcul de l'ensemble optimisé de trajets individuels entre des paires d'emplacements plans parmi la pluralité d'emplacements plans (5') comprend en outre l'application d'au moins une contrainte choisie dans le groupe suivant :
- minimisation d'une longueur de trajet de chaque trajet individuel ;
- minimisation d'une longueur de trajet pondérée de chacun des trajets individuels ;
- minimisation d'un nombre de courbes de trajet pour chaque trajet individuel ;
- minimisation d'un nombre de trajets individuels rejoignant un autre trajet individuel ;
- distribution uniforme du trafic des supports par champ plan (5) ;
- limitation de mouvements de champ à champ entre deux champs plans (5) à un mouvement entre des champs plans adjacents uniquement ;
- exclusion des champs plans (5) réservés à la mise en file d'attente des supports ;
- distribution uniforme de l'usure prédite des champs plans sur la pluralité des champs plans (5) du plan de transport (1) ;
- minimisation de la consommation d'énergie du système de distribution des échantillons de laboratoire ; et
- minimisation/évitement des zones de 2x2 positions planes avec quatre croisements.

15. Procédé selon au moins l'une des revendications précédentes, dans lequel la prévention de l'agencement d'interblocage sur le plan de transport (1) comprend en outre la prévention du déplacement d'un support (4) le long d'un segment de trajet correspondant dans le cas où un dernier champ (5) des champs (5) du segment de trajet correspondant est compris par le trajet individuel (6) d'un autre support (4).

16. Système de distribution des échantillons de laboratoire, comprenant :
- une pluralité de supports (4) ayant un nombre de n (n>3) supports (4) chacun configuré pour porter un ou plusieurs récipients d'échantillon contenant un échantillon à analyser par des dispositifs de laboratoire (3) ;
- un plan de transport (1) attribué aux dispositifs de laboratoire (3) et configuré pour supporter la pluralité de supports (4), le plan de transport (1) comprenant une pluralité de modules de transport interconnectés comprenant une pluralité de champs plans (5) ; et
- un dispositif d'entraînement (13) configuré pour commander le mouvement de la pluralité de supports (4) le long de trajets individuels (6) entre la pluralité de champs plans (5), le mouvement comprenant le déplacement, en réponse à des signaux de commande d'entraînement, de la pluralité de supports (4) entre des champs plans voisins de la pluralité de champs plans le long des trajets individuels ;
le système étant configuré pour mettre en œuvre le procédé selon au moins l'une des revendications précédentes.

17. Système d'automatisation de laboratoire, comprenant un système de distribution des échantillons de laboratoire selon la revendication 16 et une pluralité de dispositifs de laboratoire (3).

18. Système d'automatisation de laboratoire selon la revendication 17, dans lequel la pluralité de dispositifs de laboratoire (3) comprend un ou plusieurs dispositifs de laboratoire choisis parmi les suivants : dispositif de laboratoire pour pré-analyse ; dispositif de laboratoire pour analyse d'échantillons ; et dispositif de laboratoire pour post-analyse.
